(19) Europäisches Patentamt / European Patent Office / Office européen des brevets

(11) **EP 4 554 003 A1**

(12) **EUROPEAN PATENT APPLICATION**
published in accordance with Art. 153(4) EPC

(43) Date of publication:
**14.05.2025 Bulletin 2025/20**

(21) Application number: **23845507.5**

(22) Date of filing: **24.07.2023**

(51) International Patent Classification (IPC):
**H01Q 1/36** $^{(2006.01)}$      **H01Q 15/24** $^{(2006.01)}$

(52) Cooperative Patent Classification (CPC):
**H01Q 1/24; H01Q 1/36; H01Q 5/10; H01Q 5/314;**
**H01Q 15/24; H04M 1/02**

(86) International application number:
**PCT/CN2023/108934**

(87) International publication number:
**WO 2024/022297 (01.02.2024 Gazette 2024/05)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:  **28.07.2022  CN 202210896555**
 **28.10.2022  CN 202211340471**

(71) Applicant: **Huawei Technologies Co., Ltd.**
**Shenzhen, Guangdong 518129 (CN)**

(72) Inventors:
• **SUN, Libin**
**Shenzhen, Guangdong 518129 (CN)**
• **WANG, Hanyang**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **ELECTRONIC DEVICE**

(57)    Embodiments of this application provide an electronic device, including an antenna. The antenna uses a metal side frame as a radiator, to implement circular polarization in a small clearance environment. The antenna uses a portion of a conductive side frame of the electronic device as a radiator, and the portion of the side frame is in a bent shape. The antenna may respectively generate a first resonance and a second resonance in two modes that have orthogonal polarizations, and a ratio of a frequency of the first resonance to a frequency of the second resonance is greater than 1 and less than or equal to 1.5. The antenna on a first frequency band between the first resonance and the second resonance may have a good circular polarization characteristic.

FIG. 18

## Description

This application claims priority to Chinese Patent Application No. 202210896555.3, filed with the China National Intellectual Property Administration on July 28, 2022 and entitled "ELECTRONIC DEVICE", and to Chinese Patent Application No. 202211340471.8, filed with the China National Intellectual Property Administration on October 28, 2022 and entitled "ELECTRONIC DEVICE", both of which are incorporated herein by reference in their entireties.

## TECHNICAL FIELD

This application relates to the field of wireless communication, and in particular, to an electronic device.

## BACKGROUND

In a satellite navigation or communication system, compared with a linearly polarized antenna, a circularly polarized antenna has some unique advantages. For example, polarization rotation (polarization rotation) (generally referred to as "Faraday rotation (Faraday rotation)") occurs when a linearly polarized wave passes through an ionosphere, but a circularly polarized wave can resist the Faraday rotation due to rotation symmetry. Therefore, the circularly polarized antenna is usually used as a transmit or receive antenna in satellite navigation or communication. In addition, in the satellite navigation or communication system, if a conventional linearly polarized antenna is used to receive a circularly polarized wave from a satellite, half of energy is lost due to polarization mismatch.

However, in consideration of factors such as an industrial design (industrial design, ID) and an overall structure of an electronic device, currently, the linearly polarized antenna is adopted for designing an antenna of an existing terminal electronic device, and a circular polarization characteristic of the antenna is not studied. Therefore, it is of great significance to design the circularly polarized antenna for implementing functions such as satellite communication or navigation in the terminal electronic device.

## SUMMARY

Embodiments of this application provide an electronic device, including an antenna. The antenna uses a metal side frame as a radiator, to implement circular polarization in a small clearance environment.

According to a first aspect, an electronic device is provided, including: a conductive side frame, where the side frame has a first position and a second position, a side frame between the first position and the second position is a first side frame, and the first side frame is in a bent shape; and an antenna including the first side frame, where the antenna is configured to generate a first resonance and a second resonance, where a ratio of a frequency of the first resonance to a frequency of the second resonance is greater than 1 and less than or equal to 1.5; and an operating frequency band of the antenna includes a first frequency band, and a frequency of the first frequency band is between the frequency of the first resonance and the frequency of the second resonance.

According to the technical solution in this embodiment of this application, the second resonance and the first resonance may be respectively generated in a first mode and a second mode (a half wavelength mode and a one wavelength mode, or a one wavelength mode and a three-half wavelength mode) that have orthogonal polarizations. By adjusting an interval frequency between the first resonance and the second resonance, the antenna may have both the first mode and the second mode on the first frequency band whose frequency is between the frequency of the first resonance and the frequency of the second resonance. On the first frequency band, the first mode and the second mode are orthogonal to each other. Because the first side frame is in the bent shape, a current component of an area in which a current zero point is located is not zero, and amplitudes (gains) of radiation generated on the frequency band in the first mode and the second mode are approximately the same. The antenna may implement circular polarization by using the first mode and the second mode that have orthogonal polarizations.

With reference to the first aspect, in some implementations of the first aspect, a circular polarization axial ratio of the antenna on the first frequency band is less than or equal to 10 dB.

With reference to the first aspect, in some implementations of the first aspect, a polarization mode of the first resonance and a polarization mode of the second resonance are orthogonal to each other.

With reference to the first aspect, in some implementations of the first aspect, on the first frequency band, a difference between a first gain generated by the antenna and a second gain generated by the antenna is less than 10 dB, where the first gain is a gain of a pattern generated by the antenna in a first polarization direction, the second gain is a gain of a pattern generated by the antenna in a second polarization direction, and the first polarization direction and the second polarization direction are orthogonal to each other.

According to the technical solution in this embodiment of this application, a difference between the first gain generated by the antenna and the second gain generated by the antenna is less than 10 dB, so that the antenna has a good circular polarization characteristic.

With reference to the first aspect, in some implementations of the first aspect, on the first frequency band, a difference between a first phase generated by the antenna and a second phase generated by the antenna is greater than 25° and less than 155°, where the first phase is a phase of the antenna in the first polarization direction, the second phase is a phase of the antenna in the second polarization direction, and the first polarization direction and the second polarization direction are orthogonal to each other.

According to the technical solution in this embodiment of this application, the difference between the first phase generated by the antenna and the second phase generated by the antenna is greater than 25° and less than 155° (90°±65°), so that the antenna has a good circular polarization characteristic.

With reference to the first aspect, in some implementations of the first aspect, the ratio of the frequency of the first resonance to the frequency of the second resonance is greater than or equal to 1.2 and less than or equal to 1.35.

According to the technical solution in this embodiment of this application, the ratio of the frequency of the first resonance to the frequency of the second resonance is greater than or equal to 1.2 and less than or equal to 1.35, so that the antenna has a good circular polarization characteristic.

With reference to the first aspect, in some implementations of the first aspect, the first side frame is divided into a first part and a second part by using a bent area, the first part extends in a first direction, and the second part extends in a second direction; and a ratio of a length of the first part to a length of the second part is greater than or equal to 0.2 and less than or equal to 5.

According to the technical solution in this embodiment of this application, the first side frame may include a plurality of bent areas. For example, the first side frame may be in a fold line shape or any irregular shape. This is not limited in this application. That a ratio of a length of the first part to a length of the second part is greater than or equal to 0.2 and less than or equal to 5 may be understood as that a ratio between lengths of parts on two sides of any bent area of the first side frame is greater than or equal to 0.2 and less than or equal to 5.

With reference to the first aspect, in some implementations of the first aspect, the first end and the second end of the first side frame are open ends.

According to the technical solution in this embodiment of this application, the antenna may be a wire antenna.

With reference to the first aspect, in some implementations of the first aspect, the antenna further includes an electronic element; and the first side frame includes a slot, and the electronic element is electrically connected between side frame on two sides of the slot.

With reference to the first aspect, in some implementations of the first aspect, the antenna further includes a ground plane, and the ground plane, the first side frame is grounded at the first position and the second position through the ground plane.

According to the technical solution in this embodiment of this application, the antenna may be a slot antenna.

With reference to the first aspect, in some implementations of the first aspect, the antenna further includes an electronic element; and the first side frame includes a connection position, and the electronic element is electrically connected between the connection position and the ground plane.

With reference to the first aspect, in some implementations of the first aspect, an equivalent capacitance value of the electronic element is less than or equal to 10 pF, or an equivalent inductance value of the electronic element is less than or equal to 10 nH.

According to the technical solution in this embodiment of this application, the electronic element is related to the ratio of the frequency of the first resonance to the frequency of the second resonance. In an embodiment, the electronic element may be configured to adjust the ratio of the frequency of the first resonance to the frequency of the second resonance to be greater than 1 and less than or equal to 1.5, for example, adjust a frequency difference between the frequency of the first resonance and the frequency of the second resonance.

With reference to the first aspect, in some implementations of the first aspect, a distance between the connection position or the slot and a center of the first side frame is less than or equal to three tenths of a first wavelength, and the first wavelength is a wavelength corresponding to the second resonance.

According to the technical solution in this embodiment of this application, when the first mode is a three-half wavelength mode, and the second mode is a one wavelength mode, the distance between the connection position or slot and the center of the first side frame is less than or equal to three tenths of the first wavelength.

With reference to the first aspect, in some implementations of the first aspect, a distance between the connection position or the slot and a center of the first side frame is less than or equal to one sixth of a first wavelength, and the first wavelength is a wavelength corresponding to the second resonance.

According to the technical solution in this embodiment of this application, when the first mode is a one wavelength mode, and the second mode is a half wavelength mode, the distance between the connection position or slot and the center of the first side frame is less than or equal to one sixth of the first wavelength.

With reference to the first aspect, in some implementations of the first aspect, the antenna further includes a feed element; and the first side frame includes a feed point, the feed point is disposed between a midpoint of the first side frame and the first position, and the feed element is coupled to the first side frame at the feed point.

With reference to the first aspect, in some implementations of the first aspect, a distance between the feed point and the first end of the first side frame is less than or equal to one fifth of the first wavelength, and the first wavelength is the wavelength corresponding to the second resonance.

According to the technical solution in this embodiment of this application, the first mode is a three-half wavelength mode, and the second mode is a one wavelength mode.

With reference to the first aspect, in some implementations of the first aspect, the distance between the feed point and the first end of the first side frame is less than or equal to one sixth of the first wavelength, and the first wavelength is the wavelength corresponding to the second resonance.

According to the technical solution in this embodiment of this application, the first mode is a one wavelength mode, and the second mode is a half wavelength mode.

According to a second aspect, a protective housing is provided, including: an annular radiator, where the radiator includes a first slot and a second slot; and an electronic element, where the electronic element is electrically connected between radiators on two sides of the first slot, where radiators on two sides of the second slot are configured to feed electrical signals with a phase difference of 180°±45°; the radiator is configured to generate a first resonance and a second resonance; a ratio of a frequency of the first resonance to a frequency of the second resonance is greater than 1 and less than or equal to 1.5; and an operating frequency band of the antenna includes a first frequency band, and a frequency of the first frequency band is between the frequency of the first resonance and the frequency of the second resonance.

With reference to the second aspect, in some implementations of the second aspect, a circular polarization axial ratio of the antenna on the first frequency band is less than or equal to 10 dB.

With reference to the second aspect, in some implementations of the second aspect, a polarization mode of the first resonance and a polarization mode of the second resonance are orthogonal to each other.

With reference to the second aspect, in some implementations of the second aspect, on the first frequency band, a difference between a first gain generated by the antenna and a second gain generated by the antenna is less than 10 dB, where the first gain is a gain of a pattern generated by the antenna in a first polarization direction, the second gain is a gain of a pattern generated by the antenna in a second polarization direction, and the first polarization direction and the second polarization direction are orthogonal to each other.

With reference to the second aspect, in some implementations of the second aspect, on the first frequency band, a difference between a first phase generated by the antenna and a second phase generated by the antenna is greater than 25° and less than 155°, where the first phase is a phase of the antenna in the first polarization direction, the second phase is a phase of the antenna in the second polarization direction, and the first polarization direction and the second polarization direction are orthogonal to each other.

With reference to the second aspect, in some implementations of the second aspect, the ratio of the frequency of the first resonance to the frequency of the second resonance is greater than or equal to 1.2 and less than or equal to 1.35.

With reference to the second aspect, in some implementations of the second aspect, an equivalent inductance value of the electronic element is less than or equal to 10 nH.

## BRIEF DESCRIPTION OF DRAWINGS

FIG. 1 is a diagram of an electronic device according to an embodiment of this application;

FIG. 2 is a diagram of a usage scenario of a circularly polarized antenna according to an embodiment of this application;

FIG. 3 is a diagram of a circularly polarized antenna according to an embodiment of this application;

FIG. 4 is a diagram of current distribution corresponding to a half wavelength mode, a one wavelength mode, and a three-half wavelength mode of a wire antenna according to this application;

FIG. 5 is a diagram of electric field distribution corresponding to a half wavelength mode, a one wavelength mode, and a three-half wavelength mode of a slot antenna according to this application;

FIG. 6 shows an S parameter of the antenna shown in FIG. 4;

FIG. 7 is a pattern generated by the antenna shown in FIG. 4 in different modes;

FIG. 8 is a diagram of an antenna according to an embodiment of this application;

FIG. 9 is a diagram of current distribution of the antenna shown in FIG. 8;

FIG. 10 shows an S parameter of the antenna shown in FIG. 8;

FIG. 11 is a pattern generated by the antenna shown in FIG. 8 in different modes;

FIG. 12 is a diagram of a phase of circular polarization according to an embodiment of this application;

FIG. 13 is a diagram of an antenna 200 according to an embodiment of this application;

FIG. 14 is a diagram of a coordinate system according to an embodiment of this application;

FIG. 15 shows a simulation result obtained after an electronic element is disposed according to an embodiment of this application;

FIG. 16 shows a simulation result obtained after an electronic element is disposed according to an embodiment of this application;

FIG. 17 is a diagram of an antenna 200 according to an embodiment of this application;

FIG. 18 is a diagram of an electronic device 10 according to an embodiment of this application;

FIG. 19 is a diagram of an electronic device 10 according to an embodiment of this application;

FIG. 20 is an S parameter diagram of the antenna 200 shown in FIG. 13;

FIG. 21 is a diagram of current distribution of the antenna 200 shown in FIG. 13 at 1.15 GHz and 1.77 GHz;

FIG. 22 is a circular polarization axial ratio pattern of the antenna 200 shown in FIG. 13;

FIG. 23 is a gain pattern of the antenna 200 shown in FIG. 13;

FIG. 24 is an S parameter diagram of the antenna 200 shown in FIG. 13;

FIG. 25 is a diagram of current distribution of the antenna 200 shown in FIG. 13 at 1.8 GHz and 2.4 GHz;

FIG. 26 is a circular polarization axial ratio pattern of the antenna 200 shown in FIG. 13;

FIG. 27 is a gain pattern of the antenna 200 shown in FIG. 13;

FIG. 28 is a diagram of a structure of an antenna 300 according to an embodiment of this application;

FIG. 29 is an S parameter diagram of the antenna 300 shown in FIG. 28;

FIG. 30 is a diagram of current distribution of the antenna 300 shown in FIG. 28 at 1.72 GHz and 2.4 GHz;

FIG. 31 is a circular polarization axial ratio pattern of the antenna 300 shown in FIG. 28;

FIG. 32 is a gain pattern of the antenna 300 shown in FIG. 28;

FIG. 33 is an S parameter diagram of the antenna 300 shown in FIG. 28;

FIG. 34 is a diagram of current distribution of the antenna 300 shown in FIG. 28 at 1.8 GHz and 2.4 GHz;

FIG. 35 is a circular polarization axial ratio pattern of the antenna 300 shown in FIG. 28;

FIG. 36 is a gain pattern of the antenna 300 shown in FIG. 28;

FIG. 37 is a diagram of a structure of an electronic device 10 according to an embodiment of this application;

FIG. 38 is a diagram of a structure of an electronic device 10 according to an embodiment of this application;

FIG. 39 is an S parameter diagram of the antenna 300 shown in FIG. 37;

FIG. 40 is a diagram of current distribution of the antenna 300 shown in FIG. 37 at 1.9 GHz and 2.2 GHz;

FIG. 41 is a circular polarization axial ratio pattern of the antenna 300 shown in FIG. 37;

FIG. 42 is a gain pattern of the antenna 300 shown in FIG. 37;

FIG. 43 is a diagram of a structure of another electronic device 20 according to an embodiment of this application;

FIG. 44 is an S parameter diagram of the antenna 300 shown in FIG. 43;

FIG. 45 is a diagram of current distribution of the antenna 300 shown in FIG. 43 at 2 GHz and 2.2 GHz;

FIG. 46 is a circular polarization axial ratio pattern of the antenna 300 shown in FIG. 43;

FIG. 47 is a gain pattern of the antenna 300 shown in FIG. 43;

FIG. 48 is a diagram of a structure of an antenna 400 according to an embodiment of this application;

FIG. 49 is a diagram of current distribution of the antenna 400 shown in FIG. 48;

FIG. 50 is a diagram of a structure of a protective housing 30 according to an embodiment of this application;

FIG. 51 is an S parameter diagram of the antenna 400 shown in FIG. 48;

FIG. 52 is an axial ratio curve diagram of the antenna 400 shown in FIG. 48;

FIG. 53 is a circular polarization axial ratio pattern of the antenna 400 shown in FIG. 48;

FIG. 54 is a gain pattern of the antenna 400 shown in FIG. 48; and

FIG. 55 is a pattern of an axial ratio and a gain of an antenna 400 when a user holds the electronic device 10 shown in FIG. 50.

## DESCRIPTION OF EMBODIMENTS

The following explains terms that may appear in embodiments of this application.

Coupling: The coupling may be understood as direct coupling and/or indirect coupling, and a "coupling connection" may be understood as a direct coupling connection and/or an indirect coupling connection. The direct coupling may also be referred to as an "electrical connection", which may be understood as physical contact and electrical conduction of components, or may be understood as a form of connection between different components in a line structure through a physical line that can transmit an electrical signal, like a printed circuit board (printed circuit board, PCB) copper foil or a conducting wire. The "indirect coupling" may be understood as electrical conduction of two conductors in a spaced/non-contact manner. In an embodiment, the indirect coupling may also be referred to as capacitive coupling. For example, signal transmission is implemented by forming an equivalent capacitor through coupling in a slot between two spaced conductive members.

Connection/being connected to: The connection/being connected to may mean a mechanical connection relationship or a physical connection relationship, for example, a connection between A and B or that A is connected to B may mean that there is a fastening component (like a screw, a bolt, or a rivet) between A and B, or A and B are in contact with each other and A and B are difficult to be separated.

Capacitor: The capacitor may be understood as a lumped capacitor and/or a distributed capacitor. The lumped capacitor is a capacitive component, for example, a capacitive element. The distributed capacitor (or a distributed type capacitor) is an equivalent capacitor formed by two conductive members that are spaced by a specific slot.

Inductor: The inductor may be understood as a lumped inductor and/or a distributed inductor. The lumped inductor is an inductive component, for example, a capacitive element. A distributed inductor (or a distributed type inductor) is an equivalent inductor formed by a conductor due to curling or rotation.

Resonance/resonance frequency: The resonance frequency is also called a resonant frequency. The resonance frequency may be a frequency at which an imaginary part of an input impedance of an antenna is zero. The resonance frequency may have a frequency range, namely, a frequency range in which a resonance occurs. A frequency corresponding to a strongest resonance point is a center frequency. A return loss of the center frequency may be less than -20 dB.

Resonance frequency band/communication frequency band/operating frequency band: Regardless of a type of antenna, the antenna always operates in a specific frequency range (a frequency band width). For example, an operating frequency band of an antenna supporting a B40 frequency band includes a frequency in a range of 2300 MHz to 2400 MHz. In other words, an operating frequency band of the antenna includes a B40 frequency band. A frequency range that meets a requirement of an indicator may be considered as an operating frequency band of the antenna.

Electrical length: The electrical length may be a ratio of a physical length (namely, a mechanical length or a geometric length) to a wavelength of a transmitted electromagnetic wave, and the electrical length may meet the following formula:

$$\overline{L} = \frac{L}{\lambda}$$

, where
L is the physical length, and $\lambda$ is the wavelength of the electromagnetic wave.

Wavelength: The wavelength or an operating wavelength may be a wavelength corresponding to a center frequency of a resonance frequency or a center frequency of an operating frequency band supported by an antenna. For example, it is assumed that a center frequency of a B1 uplink frequency band (with a resonance frequency ranging from 1920 MHz to 1980 MHz) is 1955 MHz, the operating wavelength may be a wavelength calculated by using the frequency of 1955 MHz. The "operating wavelength" is not limited to the center frequency, and may alternatively be a wavelength corresponding to a non-center frequency of the resonance frequency or the operating frequency band.

End: A first end (a second end) of a radiator of an antenna, and a ground end or an open end cannot be understood as a point in a narrow sense, and may alternatively be considered as a section of the radiator that includes a first endpoint on the radiator of the antenna. In an embodiment, the first endpoint is an endpoint of the radiator of the antenna at a first slot. For example, the first end of the radiator of the antenna may be considered as a radiator section in a first wavelength range that is one-sixteenth of a distance from the first endpoint. The first wavelength may be a wavelength corresponding to an operating frequency band of the antenna, or may be a wavelength corresponding to a center frequency of an operating frequency band, or a wavelength corresponding to a resonance point.

Open end and closed end: In some embodiments, the open end and the closed end are defined based on ground, for example, the closed end is grounded, and the open end is not grounded. Alternatively, the open end and the closed end are defined based on another conductor, for example, the closed end is electrically connected to the another conductor, and the open end is not electrically connected to the another conductor. In an embodiment, the open end may also be referred to as an opening end or an open-circuit end. In an embodiment, the closed end may also be referred to as a ground end or a short-circuit end.

A limitation on a position and a distance, such as middle or a middle position, mentioned in embodiments of this application represents a specific range. For example, a middle (position) of a conductor may be a section of a conductor part including a midpoint on the conductor, for example, the middle (position) of the conductor may be a section of the conductor part whose distance from the midpoint on the conductor is less than a predetermined threshold (for example, 1 mm, 2 mm, or 2.5 mm).

Antenna pattern: The antenna pattern is also referred to as a radiation pattern. The antenna pattern refers to a pattern in which relative field strength (a normalized modulus value) of an antenna radiation field changes with a direction at a specific distance from an antenna. The antenna pattern is usually represented by two plane patterns that are perpendicular to each other in a maximum radiation direction of the antenna.

The antenna pattern usually includes a plurality of radiation beams. A radiation beam with highest radiation strength is referred to as a main lobe, and another radiation beam is referred to as a minor lobe or side lobe. In minor lobes, a minor lobe in a reverse direction of the main lobe is also referred to as a back lobe.

Antenna return loss: The antenna return loss may be understood as a ratio of power of a signal reflected back to an antenna port through an antenna circuit to transmit power of the antenna port. A smaller reflected signal indicates a larger signal radiated by the antenna to space and higher radiation efficiency of the antenna. A larger reflected signal indicates a smaller signal radiated by the antenna to space and lower radiation efficiency of the antenna.

The antenna return loss may be represented by an S11 parameter, and S11 is one of S parameters. S11 indicates a reflection coefficient, and the parameter can represent transmit efficiency of the antenna. The S11 parameter is usually a negative number. A smaller S11 parameter indicates a smaller antenna return loss, less energy reflected back by the antenna, namely, more energy that actually enters the antenna, and higher total efficiency of the antenna. A larger S11 parameter indicates a larger antenna return loss and lower total efficiency of the antenna.

It should be noted that, -6 dB is usually used as a standard value of S11 in engineering. When the value of S11 of the antenna is less than -6 dB, it may be considered that the antenna can operate normally, or it may be considered that transmit efficiency of the antenna is good.

Polarization direction of an antenna: At a given point in space, electric field strength E (a vector) is a function of time t. A vector endpoint periodically depicts a trajectory in space over time. Polarization is referred to as vertical polarization if the trajectory is a straight line and perpendicular to the ground. Polarization is referred to as horizontal polarization if the trajectory is horizontal to the ground. Polarization is referred to as right-hand circular polarization (right-hand circular polarization, RHCP) if the trajectory is an ellipse or a circle and rotates right-handed or clockwise with the time when viewed in a propagation direction. Polarization is referred to as left-hand circular polarization (left-hand circular polarization, LHCP) if the trajectory is an ellipse or a circle and rotates left-handed or anticlockwise with the time when viewed in a propagation direction.

Axial ratio (axial ratio, AR) of an antenna: In circular polarization, a trajectory cyclically depicted by an electric field vector endpoint in space is an ellipse, and a ratio of a major axis to a minor axis of the ellipse is referred to as an axial ratio. The axial ratio is an important performance indicator of a circularly polarized antenna, indicates purity of circular polarization, and is an important indicator for measuring a difference between signal gains of the entire antenna in different directions. A circular polarization axial ratio of the antenna closer to 1 (the trajectory cyclically depicted by the electric field vector endpoint in the space is a circle) indicates better circular polarization performance of the antenna.

Clearance: The clearance refers to a distance between a radiator of an antenna and a metal or electronic element near the radiator. For example, when a part of a metal side frame of the electronic device is used as the radiator of the antenna, the clearance may refer to a distance between the radiator and a printed circuit board or an electronic element (for example, a camera).

Ground or ground plane: The ground or ground plane may generally mean at least a part of any grounding plane, grounding plate, ground metal layer, or the like in an electronic device (like a mobile phone), or at least a part of any combination of the foregoing grounding plane, grounding plate, ground component, or the like. The "ground" may be configured to ground components in the electronic device. In an embodiment, the "ground" may be a grounding plane of a circuit board of the electronic device, or may be a grounding plate formed by a middle frame of the electronic device or a ground metal layer formed by a metal film below a screen of the electronic device. In an embodiment, the circuit board may be a printed circuit board (printed circuit board, PCB), for example, an 8-layer board, a 10-layer board, a 12-layer board, a 13-layer board, or a 14-layer board having 8, 10, 12, 13, or 14 layers of conductive materials respectively, or an element that is separated and electrically insulated by a dielectric layer or an insulation layer like a glass fiber or a polymer.

Any of the foregoing grounding plane, or grounding plate, or ground metal layer is made of a conductive material. In an embodiment, the conductive material may be any one of the following materials: copper, aluminum, stainless steel, brass and alloys thereof, copper foil on an insulation laminate, aluminum foil on an insulation laminate, gold foil on an insulation laminate, silver-plated copper, silver-plated copper foil on an insulation laminate, silver foil on an insulation laminate and tin-plated copper, cloth impregnated with graphite powder, a graphite-coated laminate, a copper-plated laminate, a brass-plated laminate, and an aluminum-plated laminate. A person skilled in the art may understand that the grounding plane/grounding plate/-ground metal layer may alternatively be made of another conductive material.

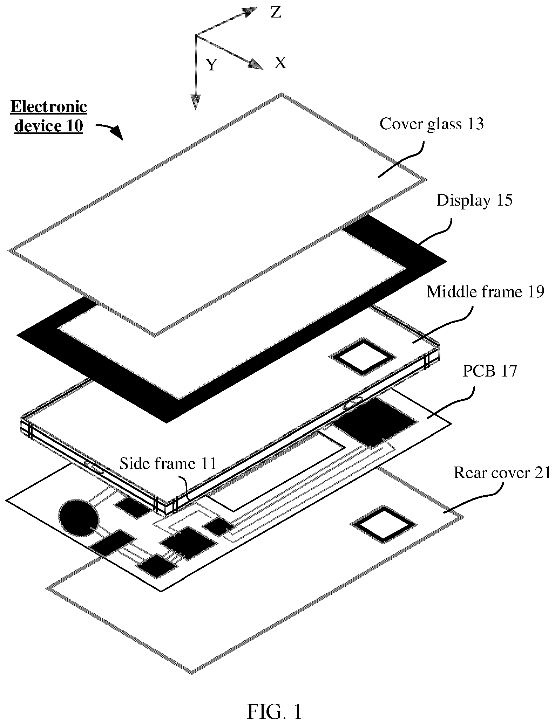

As shown in FIG. 1, an electronic device 10 may include a cover (cover) 13, a display/module (display) 15, a printed circuit board (printed circuit board, PCB) 17, a middle frame (middle frame) 19, and a rear cover (rear cover) 21. It should be understood that, in some embodiments, the cover 13 may be a cover glass (cover glass), or may be replaced with a cover of another material, for example, an ultra-thin glass material cover or a polyethylene terephthalate (Polyethylene terephthalate, PET) material cover.

The cover 13 may be tightly attached to the display module 15, and may be mainly configured to protect the display module 15 for dust resistance.

In an embodiment, the display module 15 may include a liquid crystal display (liquid crystal display, LCD), a light-emitting diode (light-emitting diode, LED) display panel, an organic light-emitting semiconductor (organic light-emitting diode, OLED) display panel, or the like. This is not limited in embodiments of this application.

The middle frame 19 is mainly used to support the entire electronic device. FIG. 1 shows that the PCB 17 is disposed between the middle frame 19 and the rear cover 21. It should be understood that, in an embodiment, the PCB 17 may alternatively be disposed between the middle frame 19 and the display module 15. This is not limited in embodiments of this application. The printed circuit board PCB 17 may be a flame-resistant material (FR-4) dielectric board, or may be a Rogers (Rogers) dielectric board, or may be a hybrid dielectric board of Rogers and FR-4, or the like. Herein, FR-4 is a grade designation of a flame-resistant material, and the Rogers dielectric board is a high-frequency board. An electronic element, for example, a radio frequency integrated circuit, is carried on the PCB 17. In an embodiment, a metal layer may be disposed on the printed circuit board PCB 17. The metal layer may be configured to ground the electronic element carried on the printed circuit board PCB 17, or may be configured to ground another element, for example, a bracketed antenna or a side frame antenna. The metal layer may be referred to as a ground plane, a grounding plate, or a grounding plane. In an embodiment, the metal layer may be formed by etching metal on a surface of any dielectric board in the PCB 17. In an embodiment, the metal layer configured for grounding may be disposed on a side that is of the printed circuit board PCB 17 that is close to the middle frame 19. In an embodiment, an edge of the printed circuit board PCB 17 may be considered as an edge of the grounding plane of the PCB 17. In an embodiment, the metal middle frame 19 may also be configured to ground the foregoing element. The electronic device 10 may further have another ground plane/grounding plate/grounding plane. As described above, details are not described herein again.

The electronic device 10 may further include a battery (not shown in the figure). The battery may be disposed between the middle frame 19 and the rear cover 21, or may be disposed between the middle frame 19 and the display module 15. This is not limited in embodiments of this application. In some embodiments, the PCB 17 is divided into a mainboard and a sub-board. The battery may be disposed between the mainboard and the sub-board. The mainboard may be disposed between the middle frame 19 and an upper edge of the battery, and the sub-board may be disposed between the middle frame 19 and a lower edge of the battery.

The electronic device 10 may further include a side frame 11. The side frame 11 may be made of a conductive material like metal. The side frame 11 may be disposed between the display module 15 and the rear cover 21, and circumferentially extends around a periphery of the electronic device 10. The side frame 11 may have four sides surrounding the display module 15, to help fasten the display module 15. In an implementation, the side frame 11 made of a metal material may be directly used as a metal side frame of the electronic device 10 to form an appearance of the metal side frame, and is applicable to a metal industrial design (industrial design, ID). In another implementation, an outer surface of the side frame 11 may alternatively be made of a material other than metal, for example, a plastic side frame, to form an appearance of a non-metal side frame, and is applicable to a non-metal ID.

The middle frame 19 may include the side frame 11, and the middle frame 19 including the side frame 11 is used as an integrated part, and may support an electronic element in the entire electronic device. The cover 13 and the rear cover 21 respectively fit upper edges and lower edges of the side frame, to enclose a casing or a housing (housing) of the electronic device. In an embodiment, the cover 13, the rear cover 21, the side frame 11, and/or the middle frame 19 may be collectively referred to as a casing or a housing of the electronic device 10. It should be understood that the "casing or housing" may be used to refer to a part or all of any one of the cover 13, the rear cover 21, the side frame 11, and the middle frame 19, or refer to a part or all of any combination of the cover 13, the rear cover 21, the side frame 11, and the middle frame 19.

At least a part of the side frame 11 on the middle frame 19 may serve as a radiator of an antenna to transmit/receive a radio frequency signal. A slot may exist between the part of the side frame that serves as the radiator and another part of the middle frame 19, to ensure that the radiator of the antenna has a good radiation environment. In an embodiment, the middle frame 19 may be provided with an aperture at the part of side frame that serves as the radiator, to facilitate radiation of the antenna.

Alternatively, the side frame 11 may not be considered as a part of the middle frame 19. In an embodiment, the side frame 11 may be connected to the middle frame 19 and integrally formed. In another embodiment, the side frame 11 may include a protruding part extending inward, to be connected to the middle frame 19, for example, connected by using an elastic sheet or a screw, or connected through welding. The protruding part of the side frame 11 may be further configured to receive a feed signal, so that at least a part of the side frame 11 serves as a radiator of an antenna to receive/transmit a radio frequency signal. A slot may exist between the middle frame 19 and the part of the side frame that serves as the radiator, to ensure that the radiator of the antenna has a good radiation environment, and the antenna has a good signal transmission function.

The rear cover 21 may be a rear cover made of a metal material, or may be a rear cover made of a non-conductive material, for example, may be a non-metal rear cover like a glass rear cover and a plastic rear cover, or may be a rear cover made of both a conductive material and a non-conductive material. In an embodiment, the rear cover 21 including the conductive material may replace the middle frame 19, and is used as an integrated member with the side frame 11, to support the electronic component in the entire electronic device.

In an embodiment, the middle frame 19 and/or the conductive part of the rear cover 21 may be used as a reference ground of the electronic device 10. The side frame, the PCB, and the like of the electronic device may be grounded by electrically connecting to the middle frame.

The antenna of the electronic device 10 may be further disposed in the side frame 11. When the side frame 11 of the electronic device 10 is made of a non-conductive material, the radiator of the antenna may be located in the electronic device 10 and disposed along the side frame 11. For example, the radiator of the antenna is disposed close to the side frame 11, to reduce a volume occupied by the radiator of the antenna as much as possible, and is closer to the outside of the electronic device 10, to achieve better signal transmission effect. It should be noted that, that the radiator of the antenna is disposed close to the side frame 11 means that the radiator of the antenna may be tightly attached to the side frame 11, or may be disposed close to the side frame 11. For example, there may be a specific small slot between the radiator of the antenna the side frame 11.

The antenna of the electronic device 10 may further be disposed in the casing, for example, a bracketed antenna or a millimeter wave antenna (not shown in FIG. 1). Clearance of the antenna disposed in the housing may be obtained by using a slit/hole in any one of the middle frame, and/or the side frame, and/or the rear cover, and/or the display, or by using a non-conductive slot/aperture formed between any several of the middle frame, and/or the side frame, and/or the rear cover, and/or the display. The clearance of the antenna may be provided, to ensure radiation performance of the antenna. It should be understood that, the clearance of the antenna may be a non-conductive area formed by any conductive component in the electronic device 10, and the antenna radiates a signal to external space through the non-conductive area. In an embodiment, a form of the antenna 40 may be an antenna form based on a flexible mainboard (flexible printed circuit, FPC), an antenna form based on laser-direct-structuring (laser-direct-structuring, LDS), or an antenna form like a microstrip disk antenna (microstrip disk antenna, MDA). In an embodiment, the antenna may alternatively use a transparent structure embedded into a display of the electronic device 10, so that the antenna is a transparent antenna element embedded into the display of the electronic device 10.

FIG. 1 shows only an example of some parts included in the electronic device 10. Actual shapes, actual sizes, and actual structures of the parts are not limited to those in FIG. 1.

It should be understood that, in embodiments of this application, it may be considered that a surface on which the display of the electronic device is located is a front surface, a surface on which the rear cover is located is a rear surface, and a surface on which the side frame is located is a side surface.

It should be understood that, in embodiments of this application, it is considered that when a user holds (the user usually holds the electronic device vertically and faces the display), an orientation in which the electronic device is located has a top part, a bottom part, a left part, and a right part.

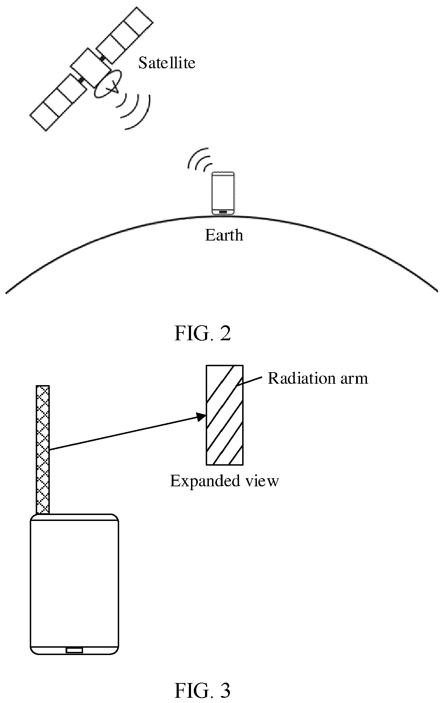

FIG. 2 is a diagram of a usage scenario of a circularly polarized antenna according to an embodiment of this application.

As shown in FIG. 2, in a satellite navigation or communication system, compared with a linearly polarized antenna, a circularly polarized antenna has some unique advantages. For example, polarization rotation (generally referred to as "Faraday rotation") occurs when a linearly polarized wave passes through an ionosphere, but a circularly polarized wave can resist the Faraday rotation due to rotation symmetry. Therefore, the circularly polarized antenna is usually used as a transmit or receive antenna in satellite navigation or communication. In addition, in the satellite navigation or communication system, if a conventional linearly polarized antenna is used to receive a circularly polarized wave from a satellite, half of energy is lost due to polarization mismatch. In addition, the circularly polarized antenna is insensitive to directions of transmit and receive antennas.

For example, the satellite navigation or communication system may be a BeiDou satellite system, and an operating frequency band of the BeiDou satellite system may include an L frequency band (1610 MHz to 1626.5 MHz), an S frequency band (2483.5 MHz to 2500 MHz), a B1 frequency band (1559 Hz to 1591 MHz), a B2 frequency band (1166 MHz to 1217 MHz), and a B3 frequency band (1250 MHz to 1286 MHz). Alternatively, the satellite navigation or communication system may be a Tiantong satellite system, and an operating frequency band of the Tiantong satellite system may include a large S frequency band (uplink: 1980 MHz to 2010 MHz, and downlink: 2170 MHz to 2200 MHz).

FIG. 3 is a diagram of a circularly polarized antenna according to an embodiment of this application.

For a satellite phone, an external circularly polarized antenna is usually used. A specific antenna structure is shown in FIG. 3. The external circularly polarized antenna includes four radiation arms printed on an outer wall of a dielectric cylinder. The four radiation arms use a circularly polarized feed network, and the four radiation arms are used to perform feeding in sequence with a phase difference of [0°, 90°, 180°, 270°], thereby implementing a circularly polarized radiation pattern of a wide beam.

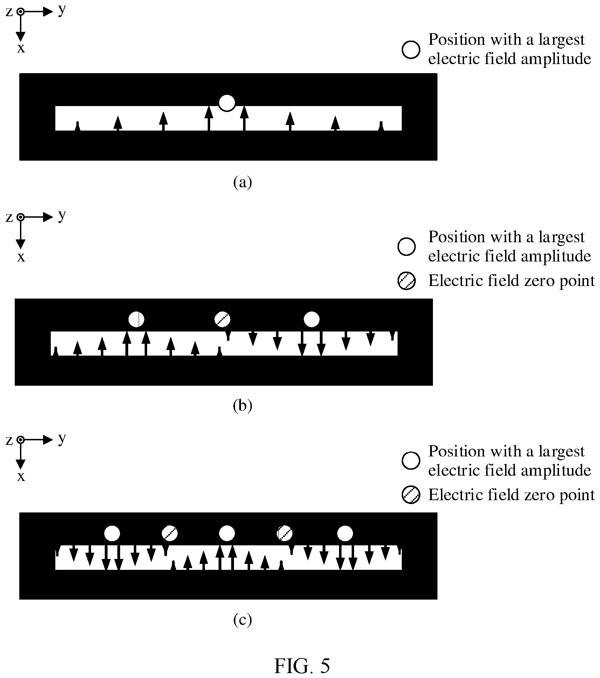

However, for an electronic device (for example, the mobile phone shown in FIG. 1), the external circularly polarized antenna shown in FIG. 5 has an excessively large size. In addition, because a plurality of electronic elements need to be disposed in the electronic device, clearance of the antenna is generally very small (for example, the clearance of the antenna is less than or equal to 2 mm, or less than or equal to 1.5 mm), and it is difficult to reserve a large amount of space for implementing circular polarization of the antenna.

Embodiments of this application provide an electronic device, including an antenna. The antenna uses a metal side frame as a radiator, to implement circular polarization in a small clearance environment.

For an ideal circularly polarized antenna, two necessary conditions for generating circular polarization are as follows: (1) A group of antenna elements whose polarization modes are orthogonal to each other, and amplitudes (gains) of radiation generated by the antenna elements are approximately the same; and (2) there is a phase difference of about 90 degrees between the antenna elements.

That polarization modes are orthogonal to each other may be understood as that an inner product of radiation generated between the antenna elements is zero (integrally orthogonal) in a far field. For integral orthogonality, it may be understood that an electric field in which the antenna element generates a resonance meets the following formula in a far field:

$$\iint E_1(\theta,\varphi) \cdot E_2(\theta,\varphi)\, d\theta d\varphi = 0,$$

where
$E_1(\theta,\varphi)$ is an electric field in a far field corresponding to a resonance generated by a first antenna element, $E_2(\theta,\varphi)$ is an electric field in a far field corresponding to a resonance generated by a second antenna element, and in a three-dimensional coordinate system, $\theta$ is an angle with a z-axis; and $\varphi$ is an angle with an x-axis on a xoy plane.

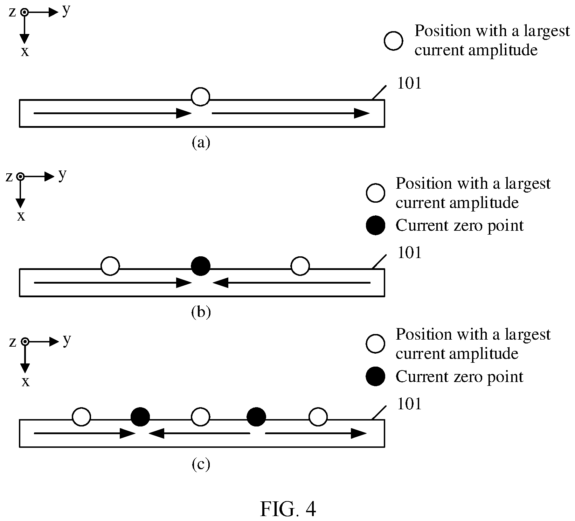

FIG. 4 and FIG. 5 describe three antenna modes in this application. In the embodiments in FIG. 4 and FIG. 5, a wire antenna (for example, a dipole antenna) and a slot antenna are used as examples. It should be understood that, in this application, descriptions of an antenna mode are not limited by using a specific antenna form and/or an antenna shape. FIG. 4 is a diagram of current distribution corresponding to a half wavelength mode, a one wavelength mode, and a three-half wavelength mode of a dipole antenna according to an embodiment. FIG. 5 is a diagram of electric field distribution corresponding to a half wavelength mode, a one wavelength mode, and a three-half wavelength mode of a slot antenna according to an embodiment.

In another embodiment of this application, the half wavelength mode, the one wavelength mode, and the three-half wavelength mode are applicable to another antenna form (the specific antenna form is an inverted F antenna (inverted F antenna, IFA), a planar inverted F antenna (planar Inverted F antenna, PIFA), a monopole antenna, a loop antenna, or the like). In addition, in another embodiment of this application, a radiator (or a slot) of the antenna may be in any form (a straight-strip form, a bent form, a linear form, a sheet-shaped form, an integrated form, or a split form), and does not affect an operating mode of the antenna.

1. Half wavelength mode

As shown in (a) in FIG. 4, a wire antenna 101 is in a half wavelength mode. In this mode, currents on the radiator of the antenna are the same in direction (there is no current zero point (a current reverse point)), and have one current strong point. For example, a current amplitude is the largest at a center of the radiator and the smallest at two ends of the radiator.

As shown in (a) in FIG. 5, a slot antenna 102 is in a half wavelength mode. In this mode, electric fields in a slot (slot) are the same in direction (there is no electric field zero point (an electric field reverse point)), and have an electric field strong point. For example, an electric field amplitude is the largest at a center of the slot and the smallest at two ends of the slot.

2. One wavelength mode

As shown in (b) in FIG. 4, the wire antenna 101 is in a one wavelength mode. In this mode, currents on the radiator of the antenna are reverse in direction (there is one current zero point (a current reverse point)). A current amplitude is the smallest at two ends and a center (the current zero point) of the radiator, and there are two current strong points. For example, a current amplitude is the largest between the ends and the center of the radiator.

As shown in (b) in FIG. 5, the slot antenna 101 is in a one wavelength mode. In this mode, electric fields in a slot are reverse in direction (there is one electric field zero point (an electric field reverse point)). An electric field amplitude is the smallest at two ends and a center (the electric field zero point) of the slot, and there are two electric field strong points. For example, a current amplitude is the largest between the ends and the center of the slot.

3. Three-half wavelength mode

As shown in (c) in FIG. 4, the wire antenna 101 is in a three-half wavelength mode. In this mode, currents on the radiator of the antenna are reverse in direction at two positions (there are two current zero points (current reverse points)), and have three current strong points. For example, a current amplitude is the largest at a center of the radiator and between the current zero points near ends of the radiator and the ends of the radiator, and is the smallest at the two ends of the radiator and the current zero points.

As shown in (c) in FIG. 5, the slot antenna 102 is in a three-half wavelength mode. In this mode, electric fields in a slot (slot) are reverse in direction at two positions (there are two electric field zero points (electric field reverse points)), and have three electric field strong points. For example, an electric field amplitude is the largest at a center of the slot and between the electric field zero points near ends of the slot and the ends of the slot, and is the smallest at the two ends of the slot and the electric field zero points.

That the currents are the same/reverse in direction mentioned in embodiments of this application should be understood as that directions of main currents on the radiator are the same/reverse. For example, the currents are integrally the same/reverse in direction. When codirectionally distributed currents are excited on an annular radiator (for example, a current path is also annular), it should be understood that, although main currents excited on conductors (for example, conductors surrounding a slot, or conductors on two sides of the slot) on two sides in the annular conductor are reverse in direction, the main currents still meet a definition of the codirectionally distributed currents in this application.

It can be learned from an electromagnetic induction theorem that the current strong point mentioned in embodiments of this application may correspond to an electric field zero point, and the current zero point may correspond to an electric field strong point. A strong point and a zero point are relative concepts, are conventionally understood by a person skilled in the art, are not the largest and smallest in a strict sense, but an area (a strong point) in which an amplitude is far greater than an average value or an area (a zero point) in which an amplitude is far less than the average value. A largest/smallest amplitude and the like should be accordingly understood.

It should be understood that a diagram of current distribution shown in each embodiment of this application shows only a current direction of an antenna at a moment when a radiator feeds an electrical signal. The schematic current distribution is a distribution diagram of most of currents (a current amplitude exceeds 50%) that are simplified for ease of understanding. For example, current distribution on a ground plane is simplified to current distribution in some areas close to the radiator, and only a general direction of the current distribution is shown.

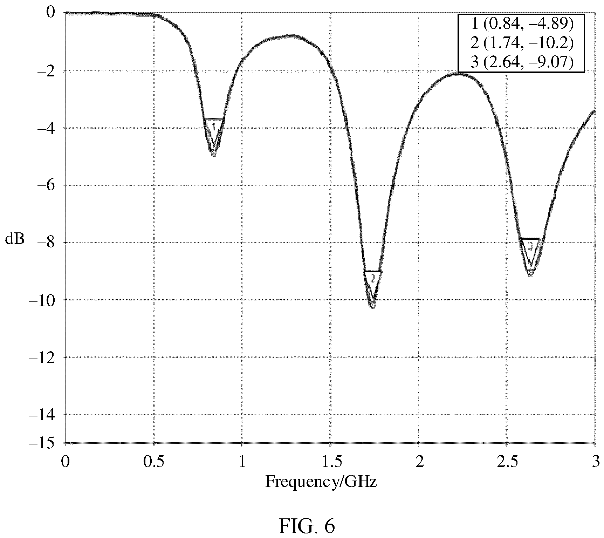

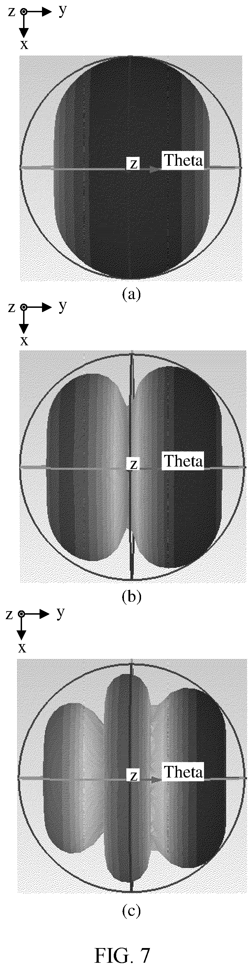

FIG. 6 and FIG. 7 show a simulation result of the antenna shown in FIG. 4. FIG. 6 shows an S parameter of the antenna shown in FIG. 4. FIG. 7 is a pattern generated by the antenna shown in FIG. 4 in different modes.

It should be understood that the antenna shown in FIG. 4 uses side feed (or referred to as "offset central feed (offset central feed)", where a feed point deviates from a central area of the radiator), and the antenna may simultaneously excite a half wavelength mode, a one wavelength mode, and a three-half wavelength mode. In an embodiment, a connection point (a feed point) between a feed element and the radiator deviates from a symmetric center (a virtual axis) of the radiator. In an embodiment, a connection point (a feed point) between a feed element and the radiator is located at an end of the radiator and is in an area within a range of a quarter of an electrical length away from an end point of the end of the radiator (excluding a position of the quarter of the electrical length), or may be in an area within a range of one eighth of a first electrical length away from an end point of the radiator, where the electrical length may be an electrical length of the radiator.

As shown in FIG. 6, when an electrical signal is fed into the antenna shown in FIG. 4, three resonances may be generated at 0.84 GHz, 1.74 GHz, and 2.64 GHz, and may respectively correspond to the half wavelength mode, the one wavelength mode, and the three-half wavelength mode.

(a) in FIG. 7 shows a pattern generated in the half wavelength mode at 0.84 GHz, and a maximum radiation direction of the antenna is in a z direction.
(b) in FIG. 7 shows a pattern generated in the one wavelength mode at 1.74 GHz, and a maximum radiation direction of the antenna is located on two sides of the z direction.

(c) in FIG. 7 shows a pattern generated in the three-half wavelength mode at 2.64 GHz, and a maximum radiation direction of the antenna is in the z direction.

It should be understood that, in the half wavelength mode and the three-half wavelength mode, a current amplitude is the largest at a midpoint of the radiator. Therefore, the maximum radiation direction of the antenna is in the z direction. In the one wavelength mode, a current amplitude is the smallest at the midpoint of the radiator, and is the largest between the center and the ends. Therefore, the maximum radiation direction of the antenna is located on two sides of the z direction.

A polarization mode in the half wavelength mode is orthogonal to a polarization mode in the one wavelength mode, and a polarization mode in the one wavelength mode is orthogonal to a polarization mode in the three-half wavelength mode. However, a pattern generated in the half wavelength mode is complementary to a pattern generated in the one wavelength mode, a pattern generated in the three-half wavelength mode is complementary to a pattern generated in the one wavelength mode, and amplitudes (gains) of radiation generated by the antenna element in the condition 1 for generating circular polarization cannot be approximately the same. Therefore, circular polarization cannot be implemented by using the half wavelength mode and the one wavelength mode, or the one wavelength mode and the three-half wavelength mode.

It should be understood that two complementary patterns may be understood as that zero points of the two patterns are not in a same direction, in other words, the zero points do not overlap. A pattern obtained by combining two complementary patterns may increase at least a gain of either pattern at the zero point. The combined pattern is formed by combining at least two patterns for ease of understanding. The combined pattern may be understood as that a gain at any angle is a larger value of gains corresponding to the angle in the at least two patterns.

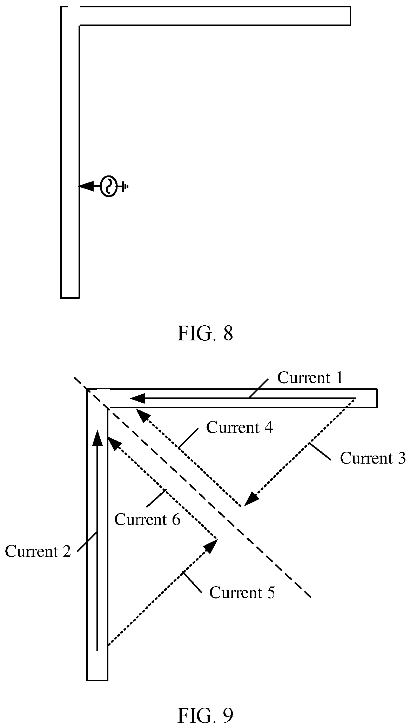

FIG. 8 is a diagram of an antenna according to an embodiment of this application.

A difference between the antenna shown in FIG. 8 and the antenna shown in FIG. 4 lies only in that a radiator may be in a bent shape.

In an embodiment, a central area of the radiator is bent, and extension directions of radiators on two sides of the central area may be at any angle after the bending. This is not limited in this application. For brevity of description, only an example in which the radiators on the two sides of the central area may be at 90° after bending is used for description.

It should be understood that the central area of the radiator may be understood as an area within 5 mm away from a center of the radiator, and the center of the radiator may be a center (a geometric center) of a physical length of the radiator or a center of an electrical length of the radiator.

It should be understood that, in the antenna shown in FIG. 8, for brevity of description, only bending in the central area of the radiator is used for description as an example. During actual application, after the radiator is bent at any position, in the one wavelength mode, a current component of a specific intensity may be retained in the central area of the radiator, and no current zero point is generated in the area. In addition, the radiator may be bent for a plurality of times. For example, the radiator may be in a U shape, a fold line shape, or the like. In addition, that the radiator is in a bent shape may also be understood as that the radiator is arc-shaped or annular, and may also have a same technical effect.

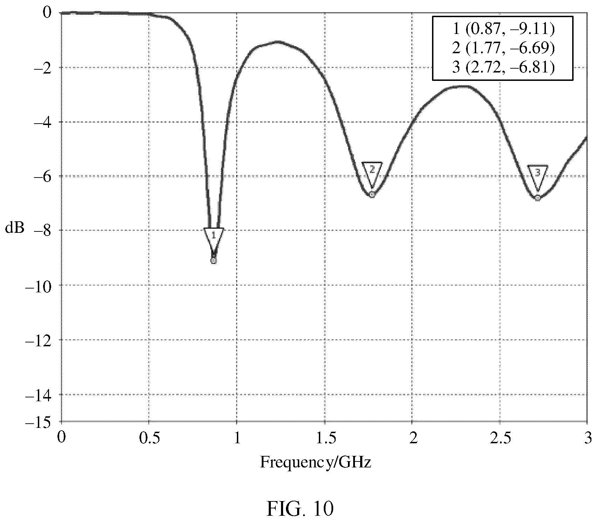

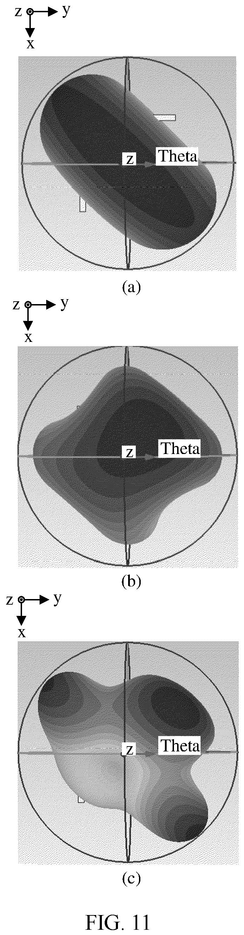

FIG. 9 to FIG. 11 show a simulation result of the antenna shown in FIG. 8. FIG. 9 is a diagram of current distribution of the antenna shown in FIG. 8. FIG. 10 shows an S parameter of the antenna shown in FIG. 8. FIG. 11 is a pattern generated by the antenna shown in FIG. 8 in different modes.

FIG. 9 shows current distribution generated on a radiator in a one wavelength mode. For a current 1 and a current 2 on two sides of a bending position, the current 1 may be decomposed into a current 3 perpendicular to a virtual axis (a bent radiator is symmetrical along the virtual axis) and a current 4 parallel to the virtual axis according to a vector synthesis principle, and the current 2 may be decomposed into a current 5 perpendicular to the virtual axis and a current 6 parallel to the virtual axis.

The current 3 and the current 5 that are perpendicular to the virtual axis cancel each other, and the current 4 and the current 6 that are parallel to the virtual axis are superimposed in a same phase. A current component of a specific intensity is still retained in a central area of the radiator, and no current zero point is generated in the area.

As shown in FIG. 10, the bent radiator does not affect an operating mode of the antenna. When an electrical signal is fed into the antenna shown in FIG. 8, three resonances may be generated at 0.87 GHz, 1.77 GHz, and 2.72 GHz, and may respectively correspond to the half wavelength mode, the one wavelength mode, and the three-half wavelength mode.

(a) in FIG. 11 is a pattern generated in the half wavelength mode at 0.87 GHz. Because the radiator is bent, a pattern of the radiator rotates, but a maximum radiation direction is still in a z direction.

(b) in FIG. 11 is a pattern generated in the one wavelength mode at 1.77 GHz. In this mode, because a current component of a specific strength is still retained in the central area of the radiator, no current zero point is generated in the area. Therefore, a zero point of the pattern is not in the z direction, and the z direction is a maximum radiation direction.

(c) in FIG. 11 is a pattern generated in the three-half wavelength mode at 2.72 GHz. Because the radiator is bent, a pattern of the radiator deviates. A maximum radiation direction deviates from a z direction, but a zero point of the pattern of the radiator is not in the z direction.

Therefore, there is a frequency f0 between a resonance frequency generated in the half wavelength mode and a resonance frequency generated in the one wavelength mode, or between a resonance frequency generated in the one wavelength mode and a resonance frequency generated in the three-half wavelength mode. At the frequency f0, there are two orthogonal polarization modes: a first mode and a second mode (the half wavelength mode and the one wavelength mode, or the one wavelength mode and the three-half wavelength mode), and amplitudes of radiation components corresponding to the two modes are approximately the same.

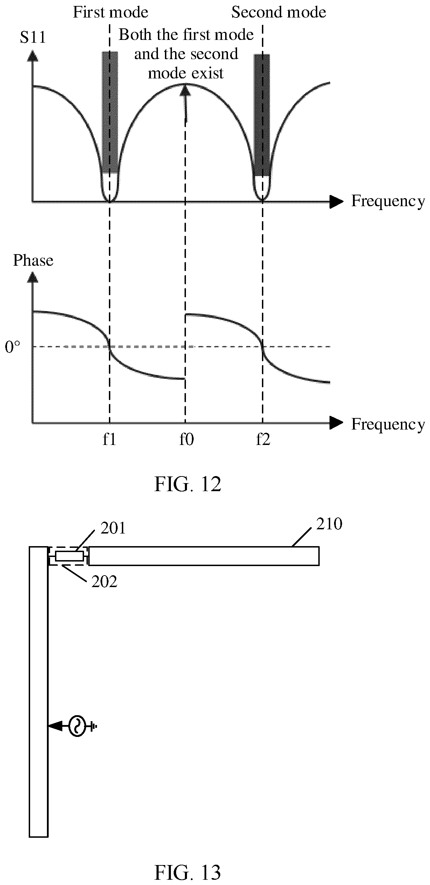

In addition, at the frequency f0, a phase of a radiation component corresponding to the first mode (for example, the half wavelength mode) is -φ1, and a phase of a radiation component corresponding to the second mode (for example, the one wavelength mode) is +φ2, as shown in FIG. 12. Therefore, when a frequency difference between a resonance frequency generated in the first mode and a resonance frequency generated in the second mode is adjusted to a proper range, 1+2≈90° may be met at the frequency fo, that is, a phase difference between the first mode and the second mode is approximately 90°.

It should be understood that, for brevity of description, in the foregoing embodiment, only the antenna is used as a wire antenna for description. During actual application, when a slot of a slot antenna is in a bent shape, an electric field component of specific strength is still retained in a central area of the radiator, no electric field zero point is generated in the area, and a same technical effect may also be achieved. Details are not described again.

FIG. 13 is a diagram of an antenna 200 according to an embodiment of this application.

As shown in FIG. 13, the antenna 200 may include a radiator 210.

The radiator 210 may be in a bent shape, and a first end and a second end of the radiator 210 are open ends. In an embodiment, the antenna 200 may be a wire antenna.

The antenna 200 may generate a first resonance and a second resonance. A ratio of a frequency of the first resonance to a frequency of the second resonance is greater than 1 and less than or equal to 1.5. An operating frequency band of the antenna 200 includes a first frequency band, and a frequency of the first frequency band is between the frequency of the first resonance and the frequency of the second resonance.

It should be understood that, that a ratio of a frequency of the first resonance to a frequency of the second resonance is greater than 1 and less than or equal to 1.5 may be understood as that a ratio of a frequency of a resonance frequency of the first resonance to a frequency of a resonance frequency of the second resonance is greater than 1 and less than or equal to 1.5, or a ratio of a frequency of a center frequency of a resonance frequency band of the first resonance to a frequency of a center frequency of a resonance frequency band of the second resonance is greater than 1 and less than or equal to 1.5. That a frequency of the first frequency band is between the frequency of the first resonance and the frequency of the second resonance may be understood as that a frequency of a center frequency of the first frequency band is greater than or equal to the frequency of the resonance frequency of the second resonance, and is less than or equal to the frequency of the resonance frequency of the first resonance, or a frequency of a center frequency of the first frequency band is greater than or equal to the frequency of the center frequency of the resonance frequency band of the second resonance, and is less than or equal to the frequency of the center frequency of the resonance frequency band of the first resonance.

In the antenna 200 shown in FIG. 13, the second resonance and the first resonance may be respectively generated in a first mode and a second mode (a half wavelength mode and a one wavelength mode, or a one wavelength mode and a three-half wavelength mode) that have orthogonal polarizations. By adjusting an interval frequency between the first resonance and the second resonance, the antenna 200 may have both the first mode and the second mode on the first frequency band whose frequency is between the frequency of the first resonance and the frequency of the second resonance. On the first frequency band, the first mode and the second mode are orthogonal to each other. Because the radiator 210 is in the bent shape, a current component of an area in which a current zero point is located is not zero, and amplitudes (gains) of radiation generated on the frequency band in the first mode and the second mode are approximately the same. The antenna 200 may implement circular polarization by using the first mode and the second mode that have orthogonal polarizations.

In an embodiment, a circular polarization axial ratio of the antenna 200 on the first frequency band is less than or equal to 10 dB. It should be understood that, when the circular polarization axial ratio of the antenna 200 is less than or equal to 10 dB, it may be considered that the antenna 200 has a good circular polarization characteristic.

In an embodiment, the ratio of the frequency of the first resonance to the frequency of the second resonance is greater than or equal to 1.2 and less than or equal to 1.35, so that the antenna 200 has a good circular polarization characteristic.

In an embodiment, on the first frequency band, a difference between a first gain generated by the antenna 200 and a second gain generated by the antenna 200 is less than 10 dB, so that the antenna 200 has a good circular polarization characteristic. The first gain is a gain of a pattern generated by the antenna 200 in a first polarization direction, the second gain is a gain of a pattern generated by the antenna 200 in a second polarization direction, and the first polarization direction and the second polarization direction are orthogonal to each other. The first polarization direction may be a polarization direction corresponding to the first mode, and the second polarization direction may be a polarization direction corresponding to the second mode.

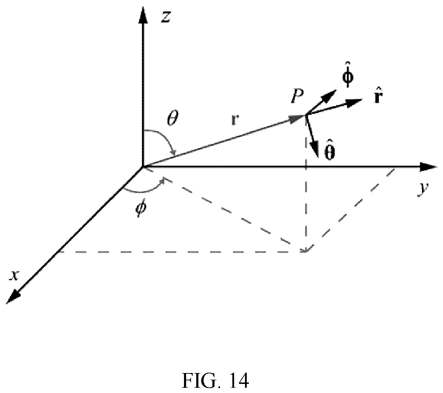

It should be understood that, as shown in FIG. 14, any point P in three-dimensional space is circled by using an origin O as a circle center and a distance from the origin O to the point P as a radius. Theta polarization is polarization in a tangent direction of a line of longitude of the circle at the point P. Phi polarization is polarization in a tangent direction of a line of latitude of the circle at the point P. The abs polarization is a combination of theta polarization and the phi polarization. The abs polarization is total polarization, and the theta polarization and the phi polarization are two polarization components of the abs polarization. The first polarization and the second polarization may be respectively the theta polarization and the phi polarization.

In an embodiment, on the first frequency band, a difference between a first phase generated by the antenna 200 and a second phase generated by the antenna 200 is greater than 25° and less than 155° (90°±65°), so that the antenna 200 has a good circular polarization characteristic. The first phase is a phase of radiation generated by the antenna 200 in the first polarization direction, the second phase is a phase of radiation generated by the antenna 200 in the second polarization direction, and the first polarization direction and the second polarization direction are orthogonal to each other. The first polarization direction may be a polarization direction corresponding to the first mode, and the second polarization direction may be a polarization direction corresponding to the second mode.

In an embodiment, the antenna 200 may further include an electronic element 201. The radiator 210 may include a slot 202. The electronic element 201 may be disposed in the slot 202. In an embodiment, the electronic element 201 is connected in series to the radiator 210 through the slot 202. In an embodiment, two ends of the electronic element 201 are electrically connected to radiators 210 on two sides of the slot 202 respectively.

It should be understood that the electronic element 201 is related to the ratio of the frequency of the first resonance to the frequency of the second resonance. In an embodiment, the electronic element 201 may be configured to adjust the ratio of the frequency of the first resonance to the frequency of the second resonance to be greater than 1 and less than or equal to 1.5, for example, adjust a frequency difference between the frequency of the first resonance and the frequency of the second resonance.

the second resonance.

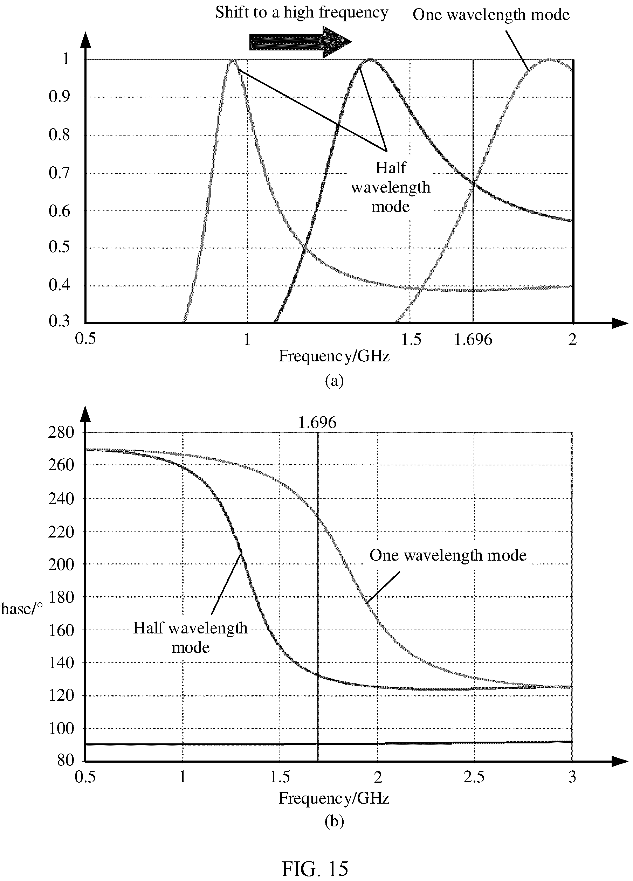

In an embodiment, when the first mode is the one wavelength mode, and the second mode is the half wavelength mode, the electronic element 201 may be a capacitor (which may also be understood as an equivalent capacitor). As shown in (a) in FIG. 15, the first gain generated by the antenna 200 in the first mode and the second gain generated by the antenna 200 in the second mode have an approximately same amplitude (after normalization), and meet a circular polarization condition. The electronic element 201 may be configured to shift a resonance generated in the half wavelength mode to a high frequency. Therefore, a difference between a first phase and a second phase that are generated by the antenna 200 on the first frequency band (near 1.696 GHz) meets a circular polarization condition (for example, 90°±65°), as shown in (b) in FIG. 15.

In an embodiment, a capacitance value (which may also be understood as an equivalent capacitance value) of the electronic element 201 is less than or equal to 10 pF.

In an embodiment, when the first mode is the one wavelength mode, and the second mode is the half wavelength mode, a distance between the slot 202 and a center of the radiator 210 may be less than or equal to one sixth of a first wavelength, where the first wavelength may be understood as a wavelength corresponding to a resonance frequency band (for example, a resonance point or a center frequency of the resonance frequency band) generated in the second mode.

It should be understood that the center of the radiator 210 may be understood as a geometric center of the radiator (physical lengths of radiators on two sides of the center are the same), or an electrical length center of the radiator (electrical lengths of radiators on two sides of the center are the same). The distance between the slot 202 and the center of the radiator 210 may be understood as a distance between the center of the slot 202 and the center of the radiator 210 along the radiator 210.

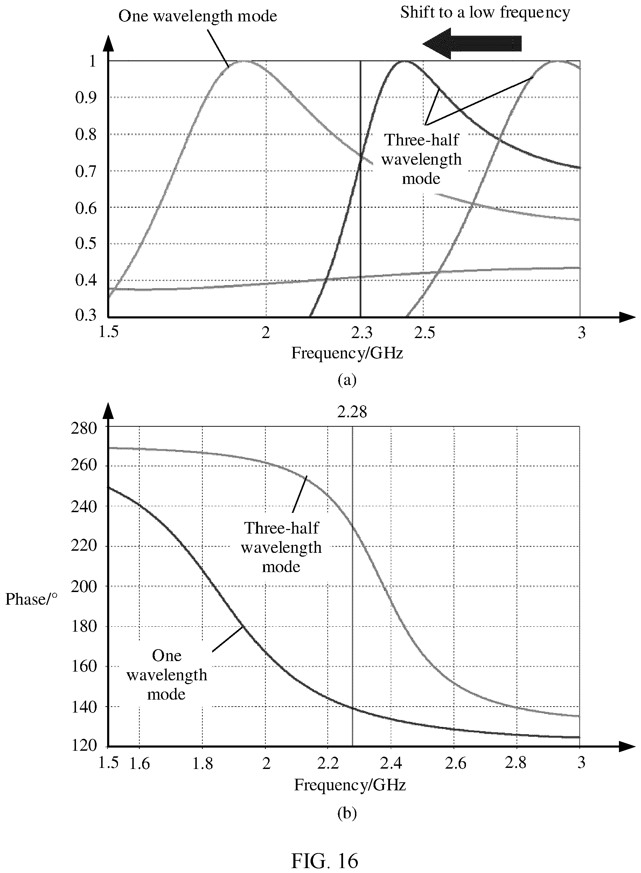

In an embodiment, when the first mode is the three-half wavelength mode, and the second mode is the one wavelength mode, the electronic element 201 may be an inductor (which may also be understood as an equivalent inductor). As shown in (a) in FIG. 16, the first gain generated by the antenna 200 in the first mode and the second gain generated by the antenna 200 in the second mode have an approximately same amplitude (after normalization), and meet a circular polarization condition. The electronic element 201 may be configured to shift a resonance generated in the three-half wavelength mode to a low frequency. Therefore, a difference between a first phase and a second phase that are generated by the antenna 200 on the first frequency band (near 2.3 GHz) meets a circular polarization condition (for example, 90°±65°), as shown in (b) in FIG. 16.

In an embodiment, an inductance value (which may also be understood as an equivalent inductance value) of the electronic element 201 is less than or equal to 10 nH.

In an embodiment, when the first mode is the three-half wavelength mode, and the second mode is the one wavelength mode, the distance between the slot 202 and the center of the radiator 210 may be less than or equal to three tenths of the first wavelength.

In an embodiment, the antenna 200 may further include a feed element 220. The radiator 210 may include a feed point 221. The feed element 220 and the radiator 210 are coupled at the feed point 221, for example, may be directly coupled or indirectly coupled. This is not limited in this application. In an embodiment, the feed point 221 deviates from the center of the radiator 210, and an electrical signal is fed into the antenna 200 in a side-feed manner, to simultaneously excite the half wavelength mode, the one wavelength mode, and the three-half wavelength mode. The antenna 200 has a simple structure, and is easy to be laid out in an electronic device.

In an embodiment, when the first mode is the one wavelength mode, and the second mode is the half wavelength mode, a distance between the feed point 221 and an end part of the first end of the radiator 210 may be less than or equal to one sixth of the first wavelength.

In an embodiment, when the first mode is the three-half wavelength mode, and the second mode is the one wavelength mode, a distance between the feed point 221 and an end part of the first end of the radiator 210 may be less than or equal to one fifth of the first wavelength.

In an embodiment, the radiator 210 may be divided into a first part extending in a first direction (for example, an x direction) and a second part extending in a second direction (for example, a y direction) by using a bent area. A ratio of a length of the first part to a length of the second part is greater than or equal to 0.2 and less than or equal to 5.

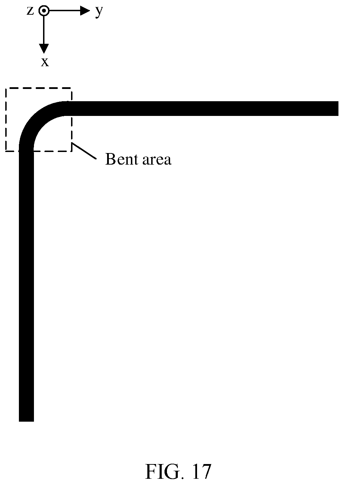

It should be understood that, in the antenna 200 shown in FIG. 13, a connection area between the first part and the second part of the radiator 210 is in a fold line shape. Therefore, in this case, the bent area is an overlapping area between the first part and the second part, and the overlapping area may be understood as an intersection area of the first part and the second part. In an embodiment, a connection area between the first part and the second part of the radiator is arc-shaped, as shown in FIG. 17. Therefore, in this case, the bent area may be the arc-shaped area. The length of the first part may be understood as a length of the first part extending in the X direction, and the length of the second part may be understood as a length of the second part extending in the Y direction.

In an embodiment, the radiator 210 may include a plurality of bent areas. For example, the radiator 210 may be in a fold line shape or any irregular shape. This is not limited in this application. For brevity of description, in this embodiment, only an example in which the radiator includes one bent area is used for description. In an embodiment, that a ratio of a length of the first part to a length of the second part is greater than or equal to 0.2 and less than or equal to 5 may be understood as that a ratio between lengths of parts on two sides of any bent area of the radiator 210 is greater than or equal to 0.2 and less than or equal to 5.

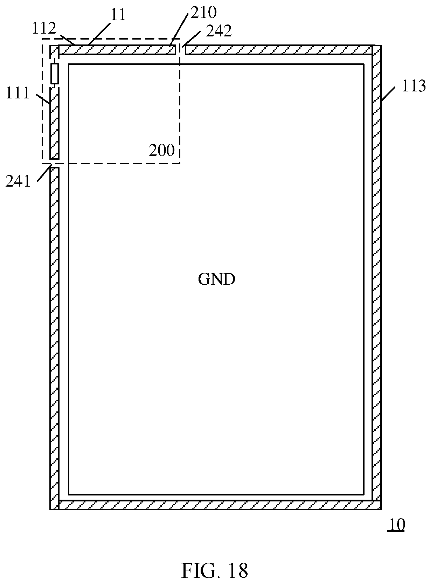

In an embodiment, the antenna 200 may be used in the electronic device shown in FIG. 1, and the radiator 210 may be a part of the side frame 11 of the electronic device. As shown in FIG. 18, the part of the side frame 11 is a conductive side frame. For example, the side frame 11 has a first position 241 and a second position 242. Gaps are provided on the side frame 11 at the first position 241 and the second position 242. A side frame between the first position 241 and the second position 242 is a first side frame, and the first side frame may be used as the radiator 210. In an embodiment, the radiator 210 may alternatively be a conductor (for example, a liquid crystal polymer (liquid crystal polymer, LCP)) inside the side frame 11 of the electronic device, and the part of the side frame 11 is a non-conductive side frame.

It should be understood that the antenna 200 may be used in the electronic device. The first side frame in the conductive side frame 11 of the electronic device is used as the radiator 210, and the antenna 200 can still implement circular polarization is in a small clearance (the clearance is less than a first threshold, for example, the first threshold may be 1 mm, 1.5 mm, or 2 mm) environment.

In an embodiment, the side frame 11 may include a first side 111 and a second side 112 that intersect at an angle, the first position 241 and the second position 242 may be respectively located on the first side 111 and the second side 112, and the radiator 210 may be L-shaped, as shown in FIG. 18. In an embodiment, the side frame may include a first side, a second side, and a third side that sequentially intersect at angles, the second side is located between the first side and the third side, the first position 241 and the second position 242 may be respectively located on the first side and the third side, and the radiator 210 may be U-shaped.

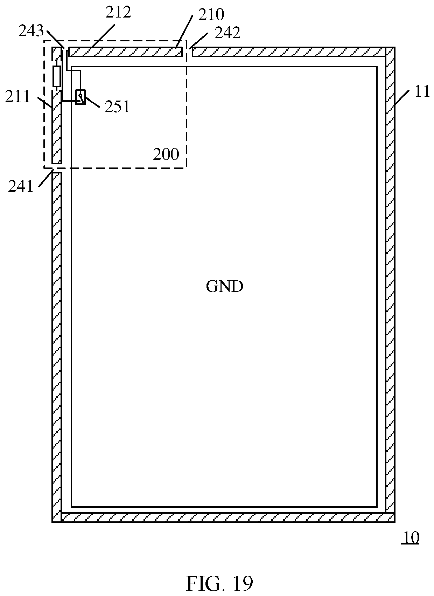

In an embodiment, the side frame 11 may further have a third position 243 located between the first position 241 and the second position 242, and a gap is provided on the side frame 11 at the third position 243, as shown in FIG. 19. A side frame between the first position 241 and the third position 243 is a second side frame, and may be used as a first stub 211 of the radiator 210. A side frame between the second position 242 and the third position 243 is a third side frame, and may be used as a second stub 212 of the radiator 210. In an embodiment, the first stub 211 and the second stub 212 may be separately used as a radiator of another antenna in the electronic device 10 for the another antenna to operate in a same operating frequency band or different operating frequency bands, so that the radiator 210 can be reused, and a plurality of antennas are implemented by using a same side frame section of the electronic device, to reduce a volume occupied by the radiator of the antenna.

In an embodiment, the antenna 200 may further include a switch 251. The switch 251 may be electrically connected between the first stub 211 and the second stub 212 that are on two sides of the third position 243. In an embodiment, when the antenna 200 operates, the switch 251 may be in a first electrical connection state, and the first stub 241 and the second stub 242 are electrically connected to jointly serve as the radiator 210 of the antenna 200. In an embodiment, when the switch 251 is in a second electrical connection state, the first stub 241 and the second stub 242 are disconnected (not electrically connected directly). The first stub 241 and the second stub 242 may be separately used as radiators of another antenna in the electronic device 10.

In an embodiment, the third position 243 may include a current zero point (or an electric field strong point) generated by the antenna 200. It should be understood that providing a gap at a position corresponding to the current zero point (or the electric field strong point) of the radiator 210 of the antenna 200 does not affect an operating mode of the antenna 200. In addition, radiators on two sides of the gap may be separately used as a radiator of another antenna, and no additional electronic element (for example, the switch 251) is introduced.

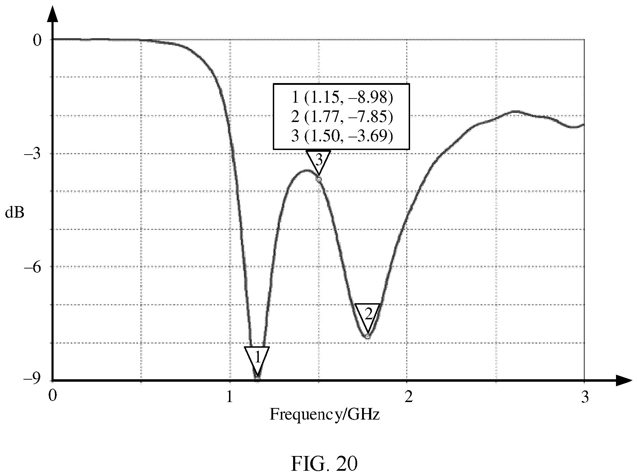

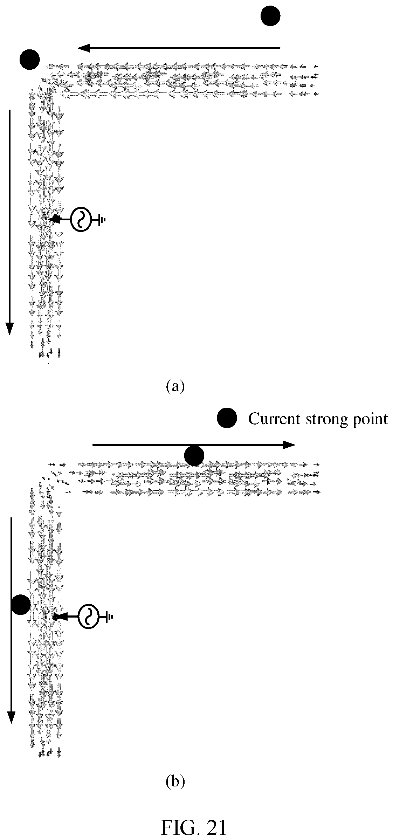

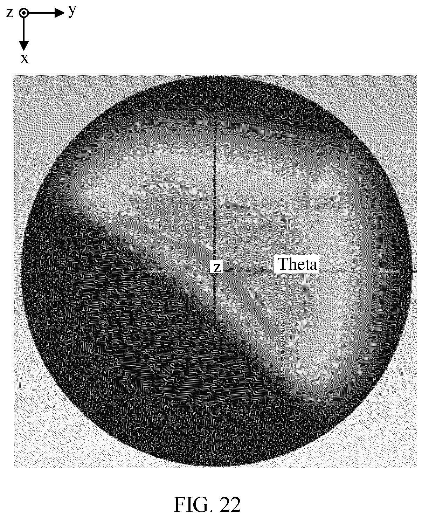

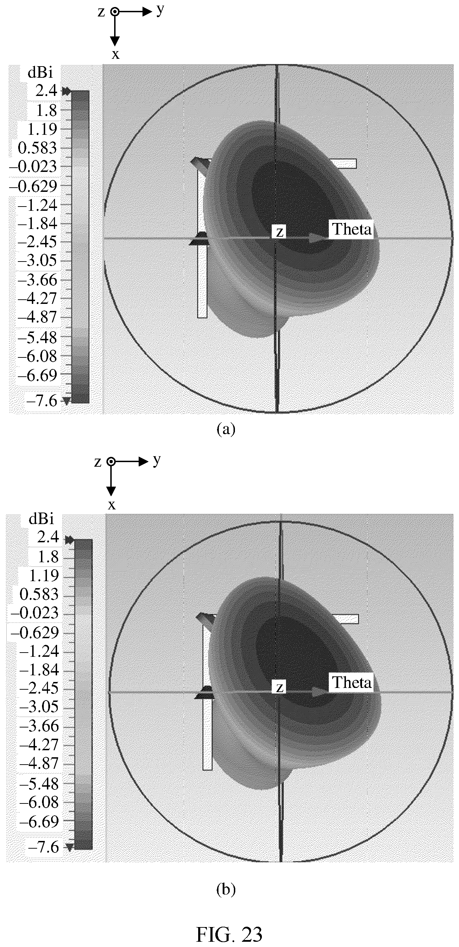

FIG. 20 to FIG. 23 are simulation result diagrams of the antenna 200 shown in FIG. 13. FIG. 20 is an S parameter diagram of the antenna 200 shown in FIG. 13. FIG. 21 is a diagram of current distribution of the antenna 200 shown in FIG. 13 at 1.15 GHz and 1.77 GHz. FIG. 22 is a circular polarization axial ratio pattern of the antenna 200 shown in FIG. 13. FIG. 23 is a gain pattern of the antenna 200 shown in FIG. 13.

It should be understood that, in this embodiment of this application, an example in which a first frequency band is between a resonance generated in a half wavelength mode of the antenna 200 shown in FIG. 13 and a resonance generated in a one wavelength mode of the antenna 200 shown in FIG. 13 is used for description. An electronic element connected in series on a radiator is a capacitor, and a capacitance value of the capacitor is 0.5 pF.

As shown in FIG. 20, the antenna generates two resonances near 1.15 GHz (the half wavelength mode) and 1.77 GHz (the one wavelength mode).

As shown in (a) in FIG. 21, currents on the radiator of the antenna are the same in direction (there is no current zero point (a current reverse point)), and have one current strong point (located in a bent area), which may correspond to the half wavelength mode of the antenna.

As shown in (b) in FIG. 21, currents on the radiator of the antenna are reverse in direction (there is one current zero point (a current reverse point) (located in a bent area)), and have two current strong points, which may correspond to the one wavelength mode of the antenna. However, because the radiator is in a bent shape, a current component in an area in which the current zero point is located is not zero.

FIG. 22 shows a circular polarization axial ratio pattern of the antenna at a frequency of 1.50 GHz. At the frequency, the antenna has both the half wavelength mode and the one wavelength mode that have orthogonal polarizations. For example, the circular polarization axial ratio is less than or equal to 10 dB. In a z direction, the antenna has a circular polarization characteristic.

As shown in (a) in FIG. 23, at 1.50 GHz, a total gain pattern of the antenna is superposition of a gain pattern generated in the half wavelength mode and a gain pattern generated in the one wavelength mode, a main radiation direction of the antenna is a z-axis direction, and a maximum gain is 2.4 dBi. (b) in FIG. 23 shows a gain corresponding to LHCP of the antenna at 1.50 GHz. A maximum radiation direction of the antenna is a z direction, and a maximum gain is 2.4 dBi.

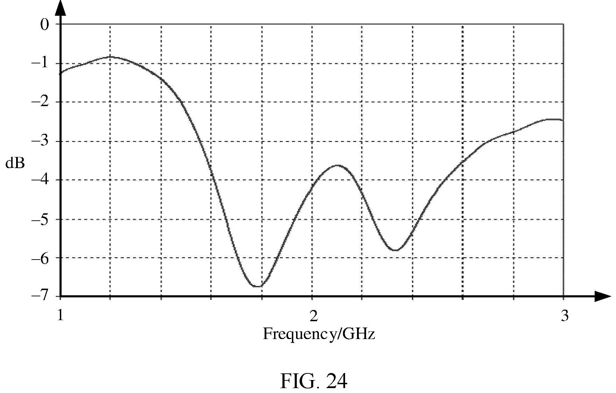

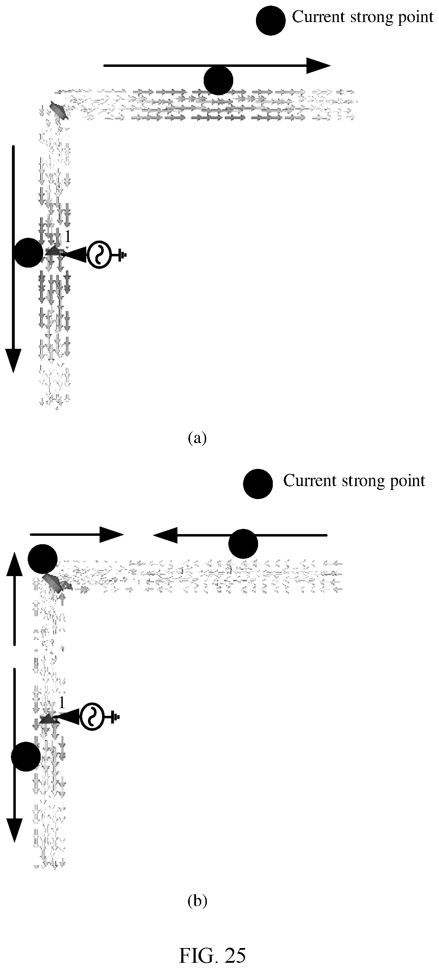

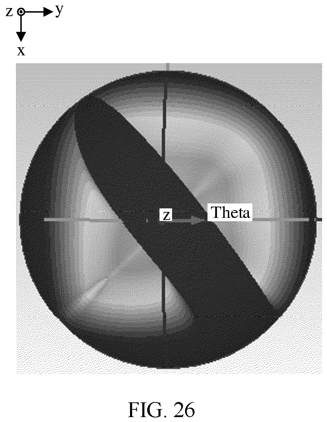

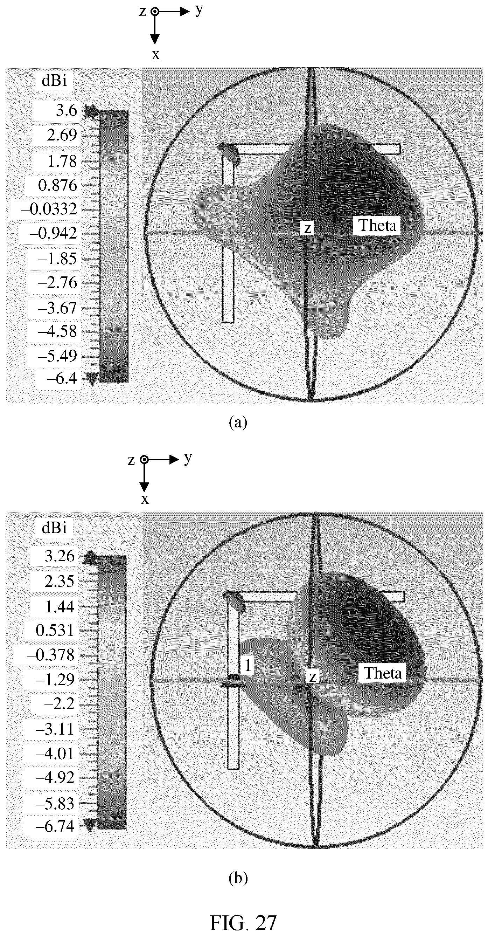

FIG. 24 to FIG. 27 are simulation result diagrams of the antenna 200 shown in FIG. 13. FIG. 24 is an S parameter diagram of the antenna 200 shown in FIG. 13. FIG. 25 is a diagram of current distribution of the antenna 200 shown in FIG. 13 at 1.8 GHz and 2.4 GHz. FIG. 26 is a circular polarization axial ratio pattern of the antenna 200 shown in FIG. 13. FIG. 27 is a gain pattern of the antenna 200 shown in FIG. 13.

It should be understood that, in this embodiment of this application, an example in which a first frequency band is between a resonance generated in a one wavelength mode of the antenna 200 shown in FIG. 13 and a resonance generated in a three-half wavelength mode of the antenna 200 shown in FIG. 13 is used for description. An electronic element connected in series on a radiator is an inductor, and an inductance value of the capacitor is 8 nH.

As shown in FIG. 24, the antenna generates two resonances near 1.8 GHz (the one wavelength mode) and 2.4 GHz (the three-half wavelength mode).

As shown in (a) in FIG. 25, currents on the radiator of the antenna are reverse in direction (there is one current zero point (a current reverse point) (located in a bent area)), and have two current strong points, which may correspond to the one wavelength mode of the antenna. However, because the radiator is in a bent shape, a current component in an area in which the current zero point is located is not zero.

As shown in (b) in FIG. 25, currents on the radiator of the antenna are reverse in direction at two positions (there are two current zero points (current reverse points)), and have three current strong points, which may correspond to the three-half wavelength mode of the antenna.

FIG. 26 shows a circular polarization axial ratio pattern of the antenna at a frequency of 2 GHz. At the frequency, the antenna has both the three-half wavelength mode and the one wavelength mode that have orthogonal polarizations. For example, the circular polarization axial ratio is less than or equal to 10 dB. In a z direction, the antenna has a circular polarization characteristic.

As shown in (a) in FIG. 27, at 2 GHz, a total gain pattern of the antenna is superposition of a gain pattern generated in the three-half wavelength mode and a gain pattern generated in the one wavelength mode, a main radiation direction of the antenna is a z-axis direction, and a maximum gain is 3.6 dBi. (b) in FIG. 27 shows a gain corresponding to LHCP of the antenna at 2 GHz. A maximum radiation direction of the antenna is approximately a z direction, and a maximum gain is 3.26 dBi.

It should be understood that, in the foregoing embodiments, an example in which the antenna is a wire antenna is used for description. During actual application, a slot antenna is also applicable.

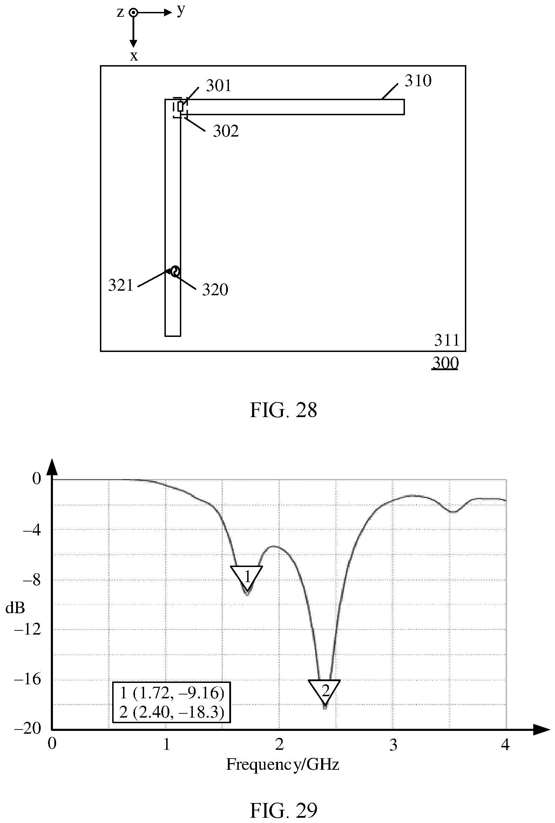

FIG. 28 is a diagram of a structure of an antenna 300 according to an embodiment of this application.

As shown in FIG. 28, the antenna 300 may include a slot 310.

The slot 310 may be in a bent shape, and the slot 310 may be disposed on a metal layer 311. In an embodiment, the antenna 300 may be a slot antenna.

The antenna 300 may generate a first resonance and a second resonance. A ratio of a frequency of the first resonance to a frequency of the second resonance is greater than 1 and less than or equal to 1.5. An operating frequency band of the antenna 300 includes a first frequency band, and a frequency of the first frequency band is between the frequency of the first resonance and the frequency of the second resonance.

In the antenna 300 shown in FIG. 28, the second resonance and the first resonance may be respectively generated in a first mode and a second mode (a half wavelength mode and a one wavelength mode, or a one wavelength mode and a three-half wavelength mode) that have orthogonal polarizations. By adjusting an interval frequency between the first resonance and the second resonance, the antenna 300 may have both the first mode and the second mode on the first frequency band whose frequency is between the frequency of the first resonance and the frequency of the second resonance. On the first frequency band, the first mode and the second mode are orthogonal to each other, and because the slot 310 is in a bent shape, amplitudes (gains) of radiation generated in the first mode and the second mode on the frequency band are approximately the same. The antenna 300 may implement circular polarization by using the first mode and the second mode that have orthogonal polarizations.

In an embodiment, a circular polarization axial ratio of the antenna 300 on the first frequency band is less than or equal to 10 dB. It should be understood that, when the circular polarization axial ratio of the antenna 300 is less than or equal to 10 dB, it may be considered that the antenna 300 has a good circular polarization characteristic.

In an embodiment, the ratio of the frequency of the first resonance to the frequency of the second resonance is greater than or equal to 1.2 and less than or equal to 1.35, so that the antenna 300 has a good circular polarization characteristic.

In an embodiment, on the first frequency band, a difference between a first gain generated by the antenna 300 and a second gain generated by the antenna 300 is less than 10 dB, so that the antenna 300 has a good circular polarization characteristic. The first gain is a gain of a pattern generated by the antenna 300 in a first polarization direction, the second gain is a gain of a pattern generated by the antenna 300 in a second polarization direction, and the first polarization direction and the second polarization direction are orthogonal to each other. The first polarization direction may be a polarization direction corresponding to the first mode, and the second polarization direction may be a polarization direction corresponding to the second mode.

In an embodiment, on the first frequency band, a difference between a first phase generated by the antenna 300 and a second phase generated by the antenna 300 is greater than 25° and less than 155° (90°±65°), so that the antenna 300 has a good circular polarization characteristic. The first phase is a phase of radiation generated by the antenna 300 in the first polarization direction, the second phase is a phase of radiation generated by the antenna 300 in the second polarization direction, and the first polarization direction and the second polarization direction are orthogonal to each other. The first polarization direction may be a polarization direction corresponding to the first mode, and the second polarization direction may be a polarization direction corresponding to the second mode.

In an embodiment, the antenna 300 may further include an electronic element 301. The slot 310 may include a connection position 302. The electronic element 301 may be electrically connected between conductors on two sides of the connection position 302 of the slot 310.

It should be understood that the electronic element 301 is related to the ratio of the frequency of the first resonance to the frequency of the second resonance. In an embodiment, the electronic element 301 may be configured to adjust the ratio of the frequency of the first resonance to the frequency of the second resonance to be greater than 1 and less than or equal to 1.5, for example, adjust a frequency difference between the frequency of the first resonance and the frequency of the second resonance.

In an embodiment, when the first mode is the one wavelength mode, and the second mode is the half wavelength mode, the electronic element 201 may be an inductor (which may also be understood as an equivalent inductor). The electronic element 301 may be configured to shift a resonance generated in the half wavelength mode to a high frequency. Therefore, a difference between a first phase and a second phase that are generated by the antenna 300 on the first frequency band meets a circular polarization condition (for example, 90°±65°).

In an embodiment, an inductance value (which may also be understood as an equivalent inductance value) of the electronic element 301 is less than or equal to 10 pF.

In an embodiment, when the first mode is the one wavelength mode, and the second mode is the half wavelength mode, a distance between the connection position 302 and a center of the slot 310 may be less than or equal to one sixth of a first wavelength, where the first wavelength may be understood as a wavelength corresponding to a resonance frequency band (for example, a resonance point or a center frequency of the resonance frequency band) generated in the second mode.

It should be understood that the center of the slot 310 may be understood as a geometric center of the slot (physical lengths of slots on two sides of the center are the same), or a center of an electrical length of the slot (electrical lengths of slots on two sides of the center are the same). The distance between the connection position 302 and the center of the slot 310 may be understood as a distance between the connection position 302 and the center of the slot 310.

In an embodiment, when the first mode is the three-half wavelength mode, and the second mode is the one wavelength mode, the electronic element 301 may be a capacitor (which may also be understood as an equivalent capacitor). The electronic element 301 may be configured to shift a resonance generated in the three-half wavelength mode to a low frequency. Therefore, a difference between a first phase and a second phase that are generated by the antenna 300 on the first frequency band meets a circular polarization condition (for example, $90° \pm 65°$).

In an embodiment, a capacitance value (which may also be understood as an equivalent capacitance value) of the electronic element 301 is less than or equal to 10 nH.

In an embodiment, when the first mode is the three-half wavelength mode, and the second mode is the one wavelength mode, the distance between the connection position 302 and the center of the slot 310 may be less than or equal to three tenths of the first wavelength.

In an embodiment, the antenna 300 may further include a feed element 320. The slot 310 may include a feed point 321. The feed element 320 and conductors on two sides of the slot 310 are coupled at the feed point 321, for example, may be directly coupled or indirectly coupled. This is not limited in this application. In an embodiment, the feed point 321 deviates from the center of the slot 310, and an electrical signal is fed into the antenna 300 in a side-feed manner, to simultaneously excite the half wavelength mode, the one wavelength mode, and the three-half wavelength mode. The antenna 300 has a simple structure, and is easy to be laid out in an electronic device.

In an embodiment, when the first mode is the one wavelength mode, and the second mode is the half wavelength mode, a distance between the feed point 321 and an end part of the first end of the slot 310 may be less than or equal to one sixth of the first wavelength.

In an embodiment, when the first mode is the three-half wavelength mode, and the second mode is the one wavelength mode, a distance between the feed point 321 and an end part of the first end of the slot 310 may be less than or equal to one fifth of the first wavelength.

In an embodiment, the slot 310 may be divided into a first part extending in a first direction (for example, an x direction) and a second part extending in a second direction (for example, a y direction) by using a bent area. A ratio of a length of the first part to a length of the second part is greater than or equal to 0.2 and less than or equal to 5.

It should be understood that, in the antenna 300 shown in FIG. 28, a connection area between the first part and the second part of the slot 310 is in a fold line shape. Therefore, in this case, the bent area is an overlapping area between the first part and the second part, and the overlapping area may be understood as an intersection area of the first part and the second part. In an embodiment, a connection area between the first part and the second part of the radiator is arc-shaped. Therefore, in this case, the bent area may be the arc-shaped area. The length of the first part may be understood as a length of the first part extending in the x direction, and the length of the second part may be understood as a length of the second part extending in the y direction.

In an embodiment, the slot 310 may include a plurality of bent areas. For example, the slot 310 may be in a fold line shape or any irregular shape. This is not limited in this application. For brevity of description, in this embodiment, only an example in which the slot 310 includes one bent area is used for description. In an embodiment, that a ratio of a length of the first part to a length of the second part is greater than or equal to 0.2 and less than or equal to 5 may be understood as that a ratio between lengths of parts on two sides of any bent area of the slot 310 is greater than or equal to 0.2 and less than or equal to 5.

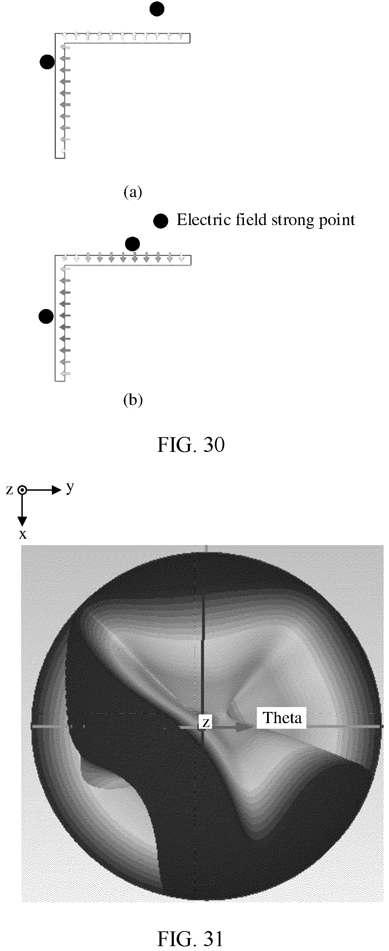

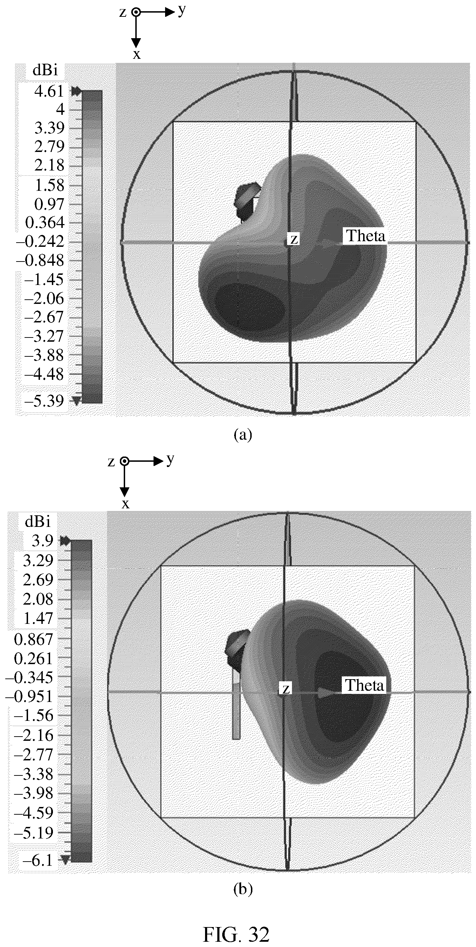

FIG. 29 to FIG. 32 are simulation result diagrams of the antenna 300 shown in FIG. 28. FIG. 29 is an S parameter diagram of the antenna 300 shown in FIG. 28. FIG. 30 is a diagram of current distribution of the antenna 300 shown in FIG. 28 at 1.72 GHz and 2.4 GHz. FIG. 31 is a circular polarization axial ratio pattern of the antenna 300 shown in FIG. 28. FIG. 32 is a gain pattern of the antenna 300 shown in FIG. 28.

It should be understood that, in this embodiment of this application, an example in which a first frequency band is between a resonance generated in a half wavelength mode of the antenna 300 shown in FIG. 28 and a resonance generated in a one wavelength mode of the antenna 300 shown in FIG. 28 is used for description. The electronic element 301 electrically connected between conductors on two sides of a slot is an inductor, and an inductance value of the inductor is 0.5 nH.

As shown in FIG. 29, the antenna generates two resonances near 1.72 GHz (the half wavelength mode) and 2.4 GHz (the one wavelength mode).

As shown in (a) in FIG. 30, electric fields in the slot are the same in direction (there is no electric field zero point (an electric field reverse point)), and have one electric field strong point (located near a bent area), which may correspond to the half wavelength mode of the antenna.

As shown in (b) in FIG. 30, electric fields in the slot are reverse in direction (there is one electric field zero point (a current reverse point) (located near a bent area)), and have two electric field strong points, which may correspond to the one wavelength mode of the antenna. However, because the slot is in a bent shape, an electric field component of an area in which the electric field zero point is located is not zero.

FIG. 31 shows a circular polarization axial ratio pattern of the antenna at a frequency of 1.9 GHz. At the frequency, the antenna has both the half wavelength mode and the one wavelength mode that have orthogonal polarizations. For example, the circular polarization axial ratio is less than or equal to 10 dB. In a z direction, the antenna has a circular polarization characteristic.

As shown in (a) in FIG. 32, at 1.9 GHz, a total gain pattern of the antenna is superposition of a gain pattern generated in the half wavelength mode and a gain pattern generated in the one wavelength mode, a main radiation direction of the antenna is approximately a z-axis direction, and a maximum gain is 4.61 dBi. (b) in FIG. 32 shows a gain corresponding to LHCP of the antenna at 1.9 GHz. A maximum radiation direction of the antenna is approximately a z direction, and a maximum gain is 3.9 dBi.

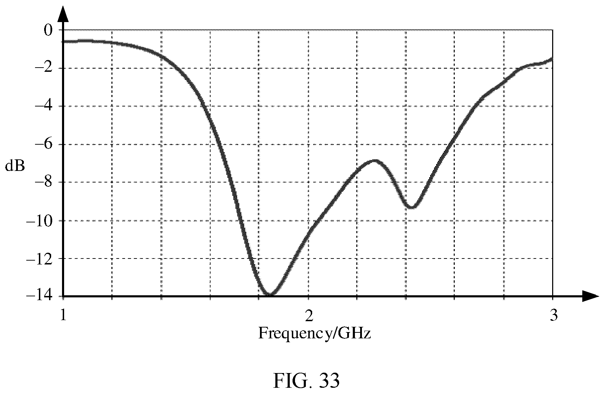

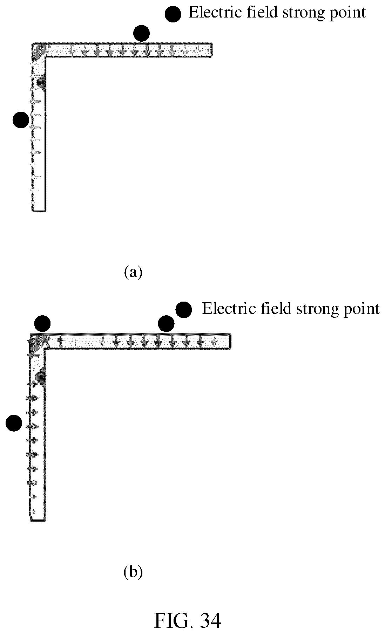

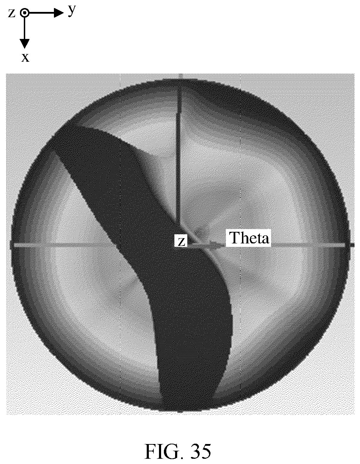

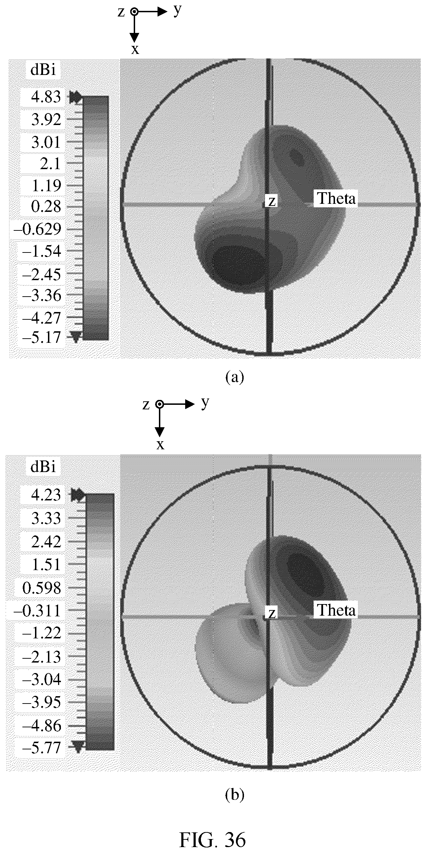

FIG. 33 to FIG. 36 are simulation result diagrams of the antenna 300 shown in FIG. 28. FIG. 33 is an S parameter diagram of the antenna 300 shown in FIG. 28. FIG. 34 is a diagram of current distribution of the antenna 300 shown in FIG. 28 at 1.8 GHz and 2.4 GHz. FIG. 35 is a circular polarization axial ratio pattern of the antenna 300 shown in FIG. 28. FIG. 36 is a gain pattern of the antenna 300 shown in FIG. 28.

It should be understood that, in this embodiment of this application, an example in which a first frequency band is between a resonance generated in a one wavelength mode of the antenna 300 shown in FIG. 28 and a resonance generated in a three-half wavelength mode of the antenna 300 shown in FIG. 28 is used for description. The electronic element 301 electrically connected between conductors on two sides of a slot is a capacitor, and an inductance value of the capacitor is 0.75 pF.

As shown in FIG. 33, the antenna generates two resonances near 1.8 GHz (the one wavelength mode) and 2.4 GHz (the three-half wavelength mode).

As shown in (a) in FIG. 34, electric fields in the slot are reverse in direction (there is one electric field zero point (a current reverse point) (located near a bent area)), and have two electric field strong points, which may correspond to the one wavelength mode of the antenna. However, because the slot is in a bent shape, an electric field component of an area in which the electric field zero point is located is not zero.

As shown in (b) in FIG. 34, electric fields in the slot are reverse in direction at two positions (there are two electric field zero points (current reverse points)), and have three electric field strong points, which may correspond to the three-half wavelength mode of the antenna.

FIG. 35 shows a circular polarization axial ratio pattern of the antenna at a frequency of 2 GHz. At the frequency, the antenna has both the three-half wavelength mode and the one wavelength mode that have orthogonal polarizations. For example, the circular polarization axial ratio is less than or equal to 10 dB. In a z direction, the antenna has a circular polarization characteristic.

As shown in (a) in FIG. 36, at 2 GHz, a total gain pattern of the antenna is superposition of a gain pattern generated in the three-half wavelength mode and a gain pattern generated in the one wavelength mode, and a main radiation direction of the antenna is approximately a z-axis direction, and a maximum gain is 4.83 dBi. (b) in FIG. 36 shows a gain corresponding to LHCP of the antenna at 2 GHz. A maximum radiation direction of the antenna is approximately a z direction, and a maximum gain is 4.23 dBi.

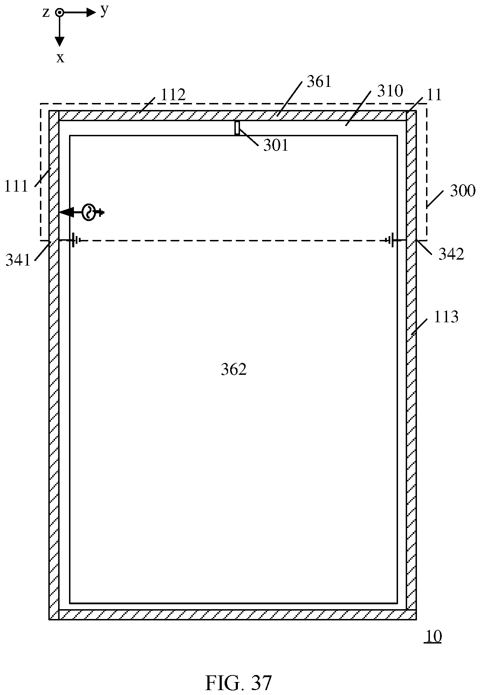

FIG. 37 is a diagram of a structure of the electronic device 10 according to an embodiment of this application.

As shown in FIG. 37, the electronic device 10 shown in FIG. 1 may include the antenna 300 shown in FIG. 28.

In an embodiment, the side frame 11 of the electronic device 10 has a first position 341 and a second position 342, and a side frame between the first position 341 and the second position 342 is a first side frame 361. Two ends of the first side frame 361 are ground ends, the side frame 11 at the first position 341 and the second position 342 is electrically connected to the ground plane 362 for grounding, and a slot 310 is enclosed between the first side frame 361 and the ground plane 362.

In an embodiment, the first side frame 361 may alternatively be a conductor (for example, an LCP) inside the side frame 11 of the electronic device, and the part of the side frame 11 is a non-conductive side frame.

It should be understood that the antenna 300 may be used in the electronic device. A slot antenna is formed by using the gap enclosed by the first side frame 361 in the conductive side frame 11 of the electronic device and the ground plane 362, and the antenna 300 can still implement circular polarization is in a small clearance (the clearance is less than a first threshold, for example, the first threshold may be 1 mm, 1.5 mm, or 2 mm) environment.

In an embodiment, the side frame 11 may include a first side 111, a second side 112, and a third side 113 that intersect at angles. The first position 341 and the second position 342 may be respectively located on the first side 111 and the third side 113, and the first side frame 361 may be U-shaped. In an embodiment, the first position 341 and the second position 342 may be respectively located on the first side 111 and the second side 112, and the first side frame 361 may be L-shaped.

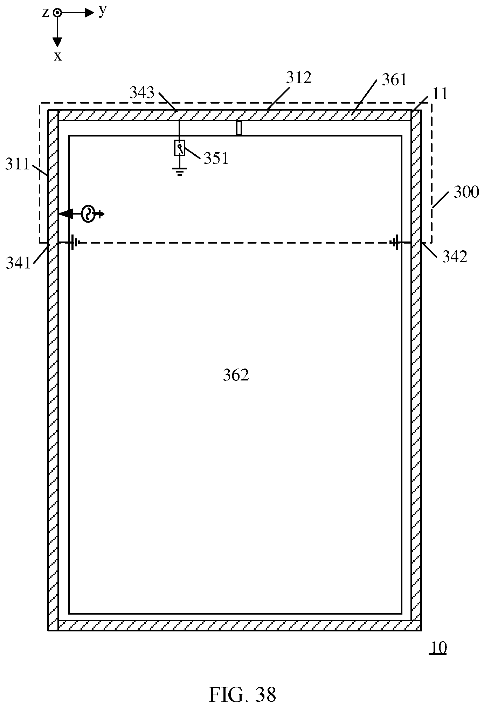

In an embodiment, the antenna 300 may further include a switch 351. The side frame 11 may further have a third position 343 located between the first position 341 and the second position 342, and the side frame 11 at the third position 343 is grounded by using the switch 351, as shown in FIG. 38. A side frame between the first position 341 and the third position 343 is a second side frame, and may be used as a first stub 311. A side frame between the second position 342 and the third position 343 is a third side frame, and may be used as a second stub 312. In an embodiment, a slot formed between the first stub 311 and the ground plane 362, and a slot formed between the second stub 312 and the ground plane 362 may be separately used for another antenna in the electronic device 10 to operate in a same operating frequency band or different operating frequency bands, so that the radiator 210 can be reused, and a plurality of antennas are implemented by using a same side frame section of the electronic device, to reduce a volume occupied by the radiator of the antenna.

In an embodiment, when the antenna 300 operates, the switch 351 may be in a first electrical connection state, and at the third position 343, the side frame is disconnected from the ground plane 362 (not directly connected electrically). The first stub 341 and the second stub 342 jointly enclose a slot of the antenna 300. In an embodiment, when the switch 251 is in a second electrical connection state, the electrical connection between the side frame and the ground plane 362 may be in a short-circuit electrical connection, and the first stub 341 and the second stub 342 may be separately used in another antenna in the electronic device 10.

In an embodiment, the third position 343 may include a current zero point (or an electric field strong point) generated by the antenna 300. It should be understood that providing a gap at a position corresponding to the electric field strong point (or the current zero point) of the slot of the antenna 300 does not affect an operating mode of the antenna 300. In addition, radiators on two sides of the gap may be separately used as a radiator of another antenna, and no additional electronic element (for example, the switch 351) is introduced. In an embodiment, there may be a plurality of third positions 343 between the first position 341 and the second position 342 of the side frame 11. This is not limited in this application.

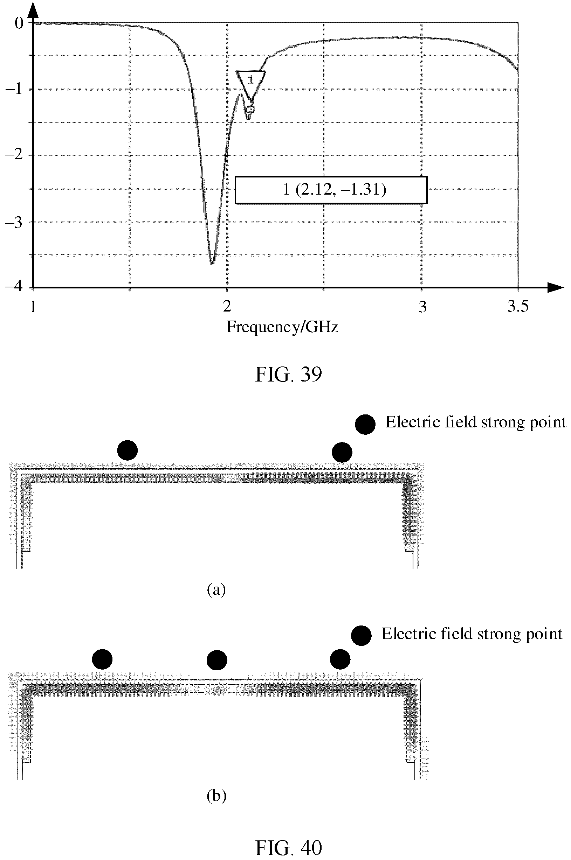

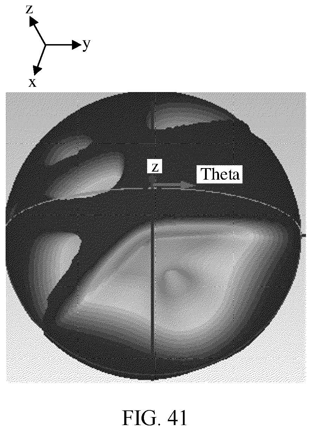

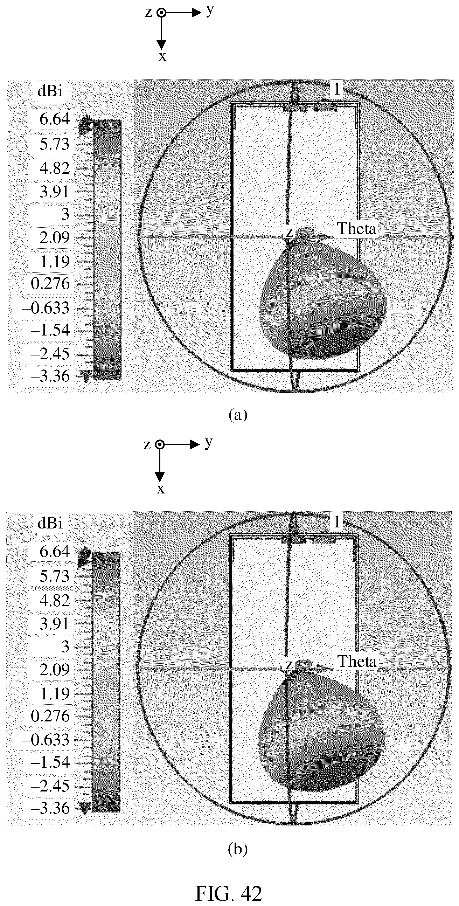

FIG. 39 to FIG. 42 are simulation result diagrams of the antenna 300 shown in FIG. 37. FIG. 39 is an S parameter diagram of the antenna 300 shown in FIG. 37. FIG. 40 is a diagram of current distribution of the antenna 300 shown in FIG. 37 at 1.9 GHz and 2.2 GHz. FIG. 41 is a circular polarization axial ratio pattern of the antenna 300 shown in FIG. 37. FIG. 42 is a gain pattern of the antenna 300 shown in FIG. 37.

It should be understood that, in this embodiment of this application, an example in which a first frequency band is between a resonance generated in a one wavelength mode of the antenna 300 and a resonance generated in a three-half wavelength mode of the antenna 300 is used for description. The electronic element 301 connected in series between the side frame and the ground plane is a capacitor, and a capacitance value of the capacitor is 0.75 pF.

As shown in FIG. 39, the antenna generates two resonances near 1.9 GHz (the one wavelength mode) and 2.2 GHz (the three-half wavelength mode).

As shown in (a) in FIG. 40, electric fields in the slot are reverse in direction (there is one electric field zero point (a current reverse point) (located near a bent area)), and have two electric field strong points, which may correspond to the one wavelength mode of the antenna. However, because the slot is in a bent shape, an electric field component of an area in which the electric field zero point is located is not zero.

As shown in (b) in FIG. 40, electric fields in the slot are reverse in direction at two positions (there are two electric field zero points (current reverse points)), and have three electric field strong points, which may correspond to the three-half wavelength mode of the antenna.

FIG. 41 shows a circular polarization axial ratio pattern of the antenna at a frequency of 2.1 GHz. At the frequency, the antenna has both the three-half wavelength mode and the one wavelength mode that have orthogonal polarizations. For example, the circular polarization axial ratio is less than or equal to 10 dB. In a z direction, the antenna has a circular polarization characteristic.

As shown in (a) in FIG. 42, at 2.1 GHz, a total gain pattern of the antenna is superposition of a gain pattern generated in the three-half wavelength mode and a gain pattern generated in the one wavelength mode, a main radiation direction of the antenna is a z-axis direction, and a maximum gain is 6.64 dBi. (b) in FIG. 42 shows a gain corresponding to LHCP of the antenna at 2.1 GHz. A maximum radiation direction of the antenna is approximately a z direction, and a maximum gain is 6.3 dBi.

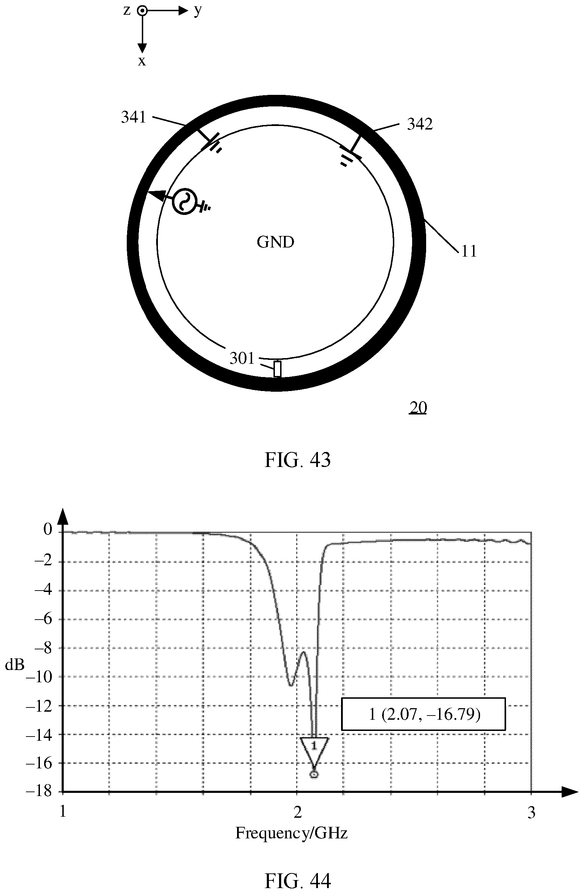

FIG. 43 is a diagram of a structure of another electronic device 20 according to an embodiment of this application.

As shown in FIG. 43, the antenna 300 shown in FIG. 28 may also be used in the electronic device 20. In an embodiment, the electronic device 20 may be a wearable device, for example, a smartwatch.

It should be understood that a difference between the antenna 300 shown in FIG. 43 and the antenna 300 shown in FIG. 37 lies only in that shapes of side frames of the electronic device are different, so that specific forms of bent slots formed between the side frames and a ground plane are different. The antenna 300 shown in FIG. 37 forms a slot between a part of a rectangular side frame of the electronic device and the ground plane, and the slot is in a fold line shape, for example, a U shape or an L shape. In the antenna 300 shown in FIG. 43, a slot is formed between a part of a circular side frame of the electronic device and the ground plane, and the slot is circular-arc-shaped.

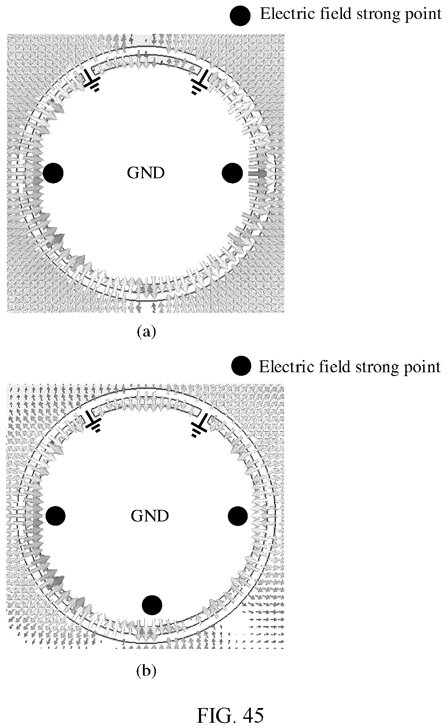

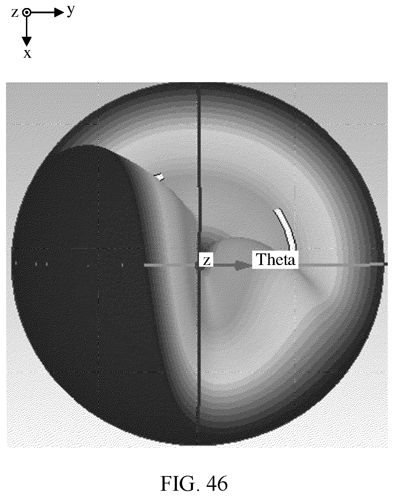

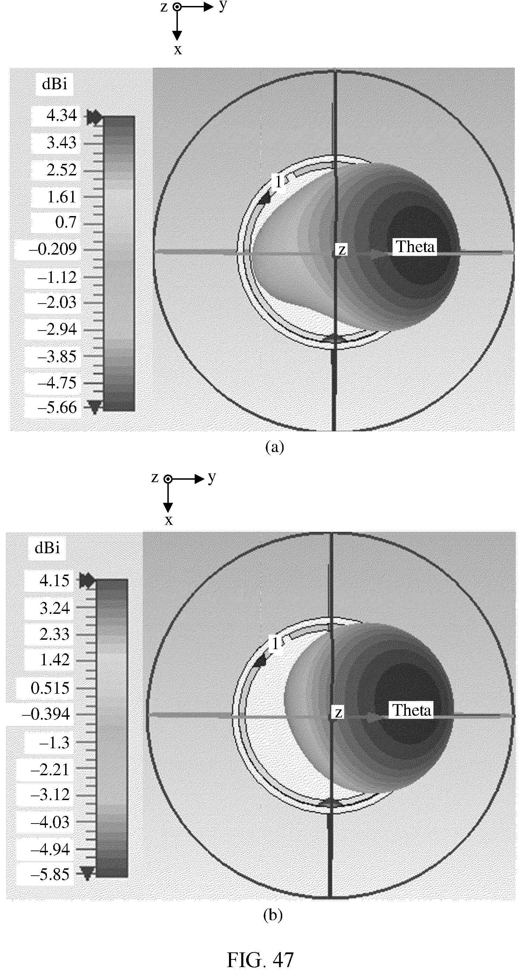

FIG. 44 to FIG. 47 are simulation result diagrams of the antenna 300 shown in FIG. 43. FIG. 44 is an S parameter diagram of the antenna 300 shown in FIG. 43. FIG. 45 is a diagram of current distribution of the antenna 300 shown in FIG. 43 at 2 GHz and 2.2 GHz. FIG. 46 is a circular polarization axial ratio pattern of the antenna 300 shown in FIG. 43. FIG. 47 is a gain pattern of the antenna 300 shown in FIG. 43.

It should be understood that, in this embodiment of this application, an example in which a first frequency band is between a resonance generated in a one wavelength mode of the antenna 300 and a resonance generated in a three-half wavelength mode of the antenna 300 is used for description. The electronic element 301 connected in series between the side frame and the ground plane is a capacitor, and a capacitance value of the capacitor is 0.5 pF.

As shown in FIG. 44, the antenna generates two resonances near 2 GHz (the one wavelength mode) and 2.1 GHz (the three-half wavelength mode).

As shown in (a) in FIG. 45, electric fields in the slot are reverse in direction (there is one electric field zero point (a current reverse point) (located near a bent area)), and have two electric field strong points, which may correspond to the one wavelength mode of the antenna. However, because the slot is in a bent shape, an electric field component of an area in which the electric field zero point is located is not zero.

As shown in (b) in FIG. 45, electric fields in the slot are reverse in direction at two positions (there are two electric field zero points (current reverse points)), and have three electric field strong points, which may correspond to the three-half wavelength mode of the antenna.

FIG. 46 shows a circular polarization axial ratio pattern of the antenna at a frequency of 2 GHz. At the frequency, the antenna has both the three-half wavelength mode and the one wavelength mode that have orthogonal polarizations. For example, the circular polarization axial ratio is less than or equal to 10 dB. In a z direction, the antenna has a circular polarization characteristic.

As shown in (a) in FIG. 47, at 2 GHz, a total gain pattern of the antenna is superposition of a gain pattern generated in the three-half wavelength mode and a gain pattern generated in the one wavelength mode, a main radiation direction of the antenna is approximately a z-axis direction, and a maximum gain is 4.3 dBi. (b) in FIG. 47 shows a gain corresponding to LHCP of the antenna at 2 GHz. A maximum radiation direction of the antenna is approximately a z direction, and a maximum gain is 4.1 dBi.

It should be understood that, in the foregoing embodiments, an example in which the antenna is a wire antenna and a slot antenna is used for description. During actual application, a loop antenna is also applicable.

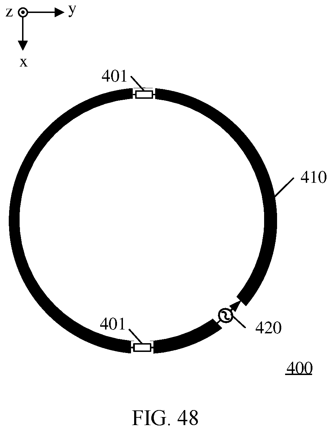

FIG. 48 is a diagram of a structure of an antenna 400 according to an embodiment of this application.

As shown in FIG. 48, the antenna 400 may include a radiator 410 and an electronic element 401.

The radiator 410 is annular, and the radiator 410 may be provided with a first slot and a second slot. In an embodiment, the antenna 400 may be a loop antenna. An electronic element 401 may be electrically connected between the radiators 410 on two sides of the first slot. The radiators on the two sides of the second slot may be configured to feed electrical signals with opposite phases.

The antenna 400 may generate a first resonance and a second resonance. A ratio of a frequency of the first resonance to a frequency of the second resonance is greater than 1 and less than or equal to 1.5. An operating frequency band of the antenna 400 includes a first frequency band, and a frequency of the first frequency band is between the frequency of the first resonance and the frequency of the second resonance.

It should be understood that an electrical signal may be fed into the antenna 400 in an anti-symmetrical feed (anti-symmetrical feed) manner. "Anti-symmetrical feed" mentioned in this application may be understood as that a positive electrode and a negative electrode of a feed element are respectively connected to two connection points (for example, two sides of the second slot) of the radiator. Signals output by the positive electrode and the negative electrode of the feed element 420 have a same amplitude but opposite phases. For example, a phase difference is 180°±45°.

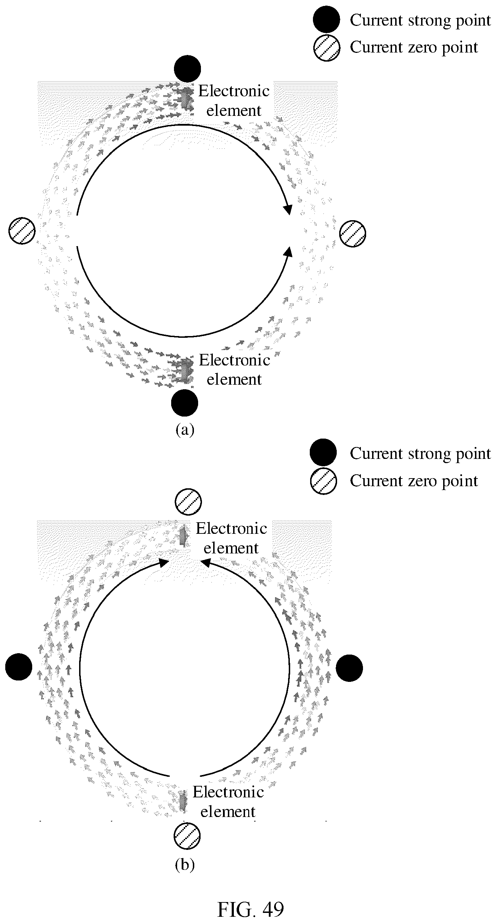

When the feed element 420 feeds an electrical signal, the antenna 400 may respectively generate a first resonance and a second resonance in a horizontal polarization (horizontal polarization, HP) mode and a vertical polarization (vertical polarization, VP) mode that have orthogonal polarizations. Current distribution corresponding to the HP mode is shown in (a) in FIG. 49, and current distribution corresponding to the VP mode is shown in (b) in FIG. 49.

As shown in (a) in FIG. 49, because the radiator 410 is an annular radiator, currents on the radiator are reverse in direction at two positions (there are two current zero points (current reverse points)), and have two current strong points, which may correspond to a one wavelength mode of the antenna. As shown in (b) in FIG. 49, because the radiator 410 is an annular radiator, currents on the radiator are reverse in direction at two positions (there are two current zero points (current reverse points)), and have two current strong points, which may correspond to a one wavelength mode of the antenna.

It should be understood that, when the antenna 400 does not include the electronic element 401, the first resonance generated in the HP mode is the same as the second resonance generated in the VP mode. Amplitudes (gains) of radiation generated in the HP mode and the VP mode are approximately the same. The first resonance and the second resonance may be separated (with a specific frequency difference) by disposing the electronic element 401 in the first slot, so that the antenna 400 has both the HP mode and the VP mode that have orthogonal polarizations on the first frequency band, and there is a specific phase difference between the HP mode and the VP mode. In this way, circular polarization is implemented.

In an embodiment, the electronic element 401 is related to the ratio of the frequency of the first resonance to the frequency of the second resonance. In an embodiment, an area in which the current zero point generated in the HP mode is located may correspond to an area in which the current strong point generated in the VP mode is located, and an area in which the current strong point generated in the HP mode is located may correspond to an area in which the current zero point generated in the VP mode is located. Therefore, when the first slot is located in the area in which the current zero point generated in the HP mode is located, the electronic element 401 may be configured to adjust a frequency of the second resonance generated in the VP mode. When the first slot is located in the area in which the current zero point generated in the VP mode is located, the electronic element 401 may be configured to adjust a frequency of the first resonance generated in the HP mode. When the first slot is located between the area in which the current zero point generated in the HP mode is located and the area in which the current zero point generated in the VP mode is located, the electronic element 401 may be configured to adjust both the frequency of the first resonance generated in the HP mode and the frequency of the second resonance generated in the VP mode.

In an embodiment, an inductance value (which may also be understood as an equivalent inductance value) of the electronic element 401 is less than or equal to 10 pF.

In an embodiment, the radiator 410 may be provided with a plurality of first slots, and has a plurality of electronic elements 401. This is not limited in this application.

In an embodiment, a circular polarization axial ratio of the antenna 400 on the first frequency band is less than or equal to 10 dB. It should be understood that, when the circular polarization axial ratio of the antenna 400 is less than or equal to 10 dB, it may be considered that the antenna 400 has a good circular polarization characteristic.

In an embodiment, the ratio of the frequency of the first resonance to the frequency of the second resonance is greater than or equal to 1.2 and less than or equal to 1.35, so that the antenna 400 has a good circular polarization characteristic.

In an embodiment, on the first frequency band, a difference between a first gain generated by the antenna 400 and a second gain generated by the antenna 400 is less than 10 dB, so that the antenna 400 has a good circular polarization characteristic. The first gain is a gain of a pattern generated by the antenna 400 in a first polarization direction, the second gain is a gain of a pattern generated by the antenna 400 in a second polarization direction, and the first polarization direction and the second polarization direction are orthogonal to each other. The first polarization direction may be a polarization direction corresponding to the HP mode, and the second polarization direction may be a polarization direction corresponding to the VP mode.

In an embodiment, on the first frequency band, a difference between a first phase generated by the antenna 400 and a second phase generated by the antenna 400 is greater than 25° and less than 155° (90°±65°), so that the antenna 400 has a good circular polarization characteristic. The first phase is a phase of radiation generated by the antenna 400 in the first polarization direction, the second phase is a phase of radiation generated by the antenna 400 in the second polarization direction, and the first polarization direction and the second polarization direction are orthogonal to each other. The first polarization direction may be a polarization direction corresponding to the HP mode, and the second polarization direction may be a polarization direction corresponding to the VP mode.

In an embodiment, the antenna 400 may be used in a protective housing 30, and may be configured to accommodate the electronic device shown in FIG. 1. The protective housing 30 may be electrically connected to the electronic device 10 through an FPC, a USB, or the like, so that an electrical signal received by the antenna 400 is transmitted to the electronic device 10, or an electrical signal of the electronic device 10 may be radiated through the antenna 400.

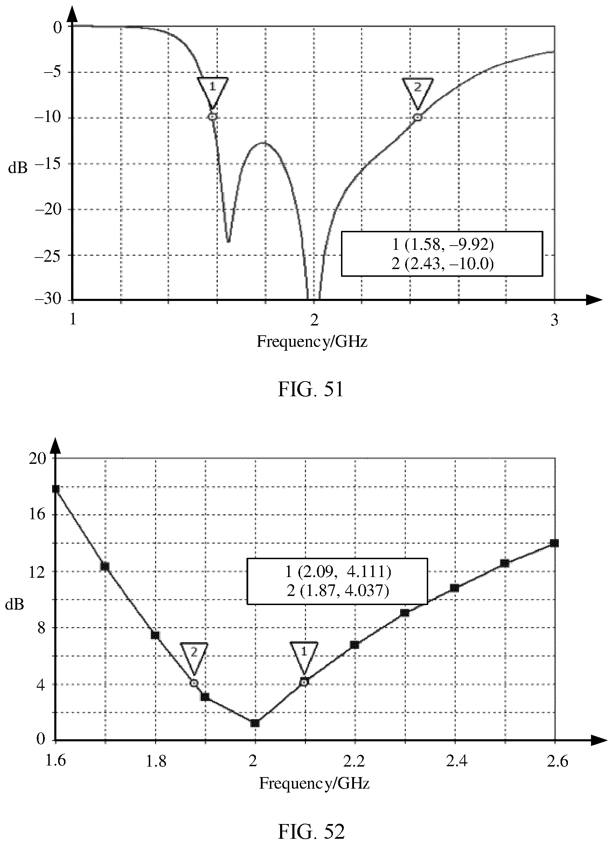

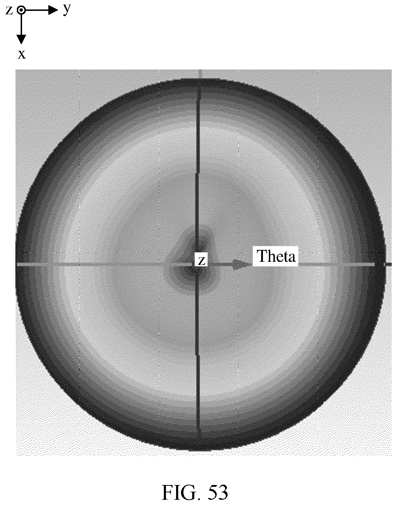

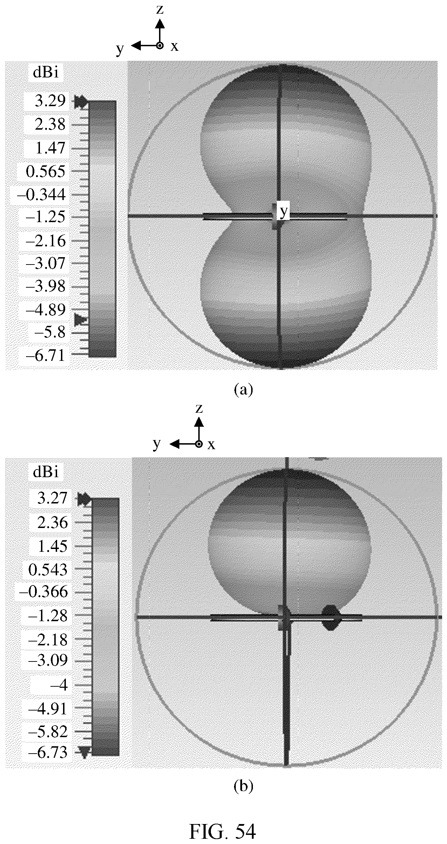

FIG. 51 to FIG. 54 are simulation result diagrams of the antenna 300 shown in FIG. 48. FIG. 51 is an S parameter diagram of the antenna 400 shown in FIG. 48. FIG. 52 is an axial ratio curve diagram of the antenna 400 shown in FIG. 48. FIG. 53 is a circular polarization axial ratio pattern of the antenna 400 shown in FIG. 48. FIG. 54 is a gain pattern of the antenna 400 shown in FIG. 48.

It should be understood that, in this embodiment of this application, an example in which the antenna is provided with two first slots and the first slots are located in a current zero point area generated in the VP mode is used for description. An electronic element disposed in the first slot is an inductor, and an inductance value is 7 nH.

As shown in FIG. 51, the antenna generates two resonances near 1.65 GHz (the HP mode) and near 2 GHz (the VP mode). When S11<-10 dB, an absolute bandwidth of the antenna is about 850 MHz (1.58 GHz to 2.43 GHz), and a relative bandwidth is 42.5%.

As shown in FIG. 52, when AR<-4 dB, an absolute axial ratio bandwidth of the antenna is 219 MHz (1.878 GHz to 2.097 GHz), and a relative axial ratio bandwidth is 11%.

FIG. 53 shows a circular polarization axial ratio pattern of the antenna at a frequency of 2 GHz. At the frequency, the antenna has both the HP mode and the VP mode that have orthogonal polarization. For example, the circular polarization axial ratio is less than or equal to 10 dB. In a z direction, the antenna has a circular polarization characteristic.

As shown in (a) in FIG. 54, at 2 GHz, a total gain pattern of the antenna is superposition of a gain pattern generated in the HP mode and a gain pattern generated in the VP mode, a main radiation direction of the antenna is approximately a z-axis direction, and a maximum gain is 3.2 dBi. (b) in FIG. 54 shows a gain corresponding to LHCP of the antenna at 2 GHz. A maximum radiation direction of the antenna is approximately a z direction, and a maximum gain is 3.2 dBi.

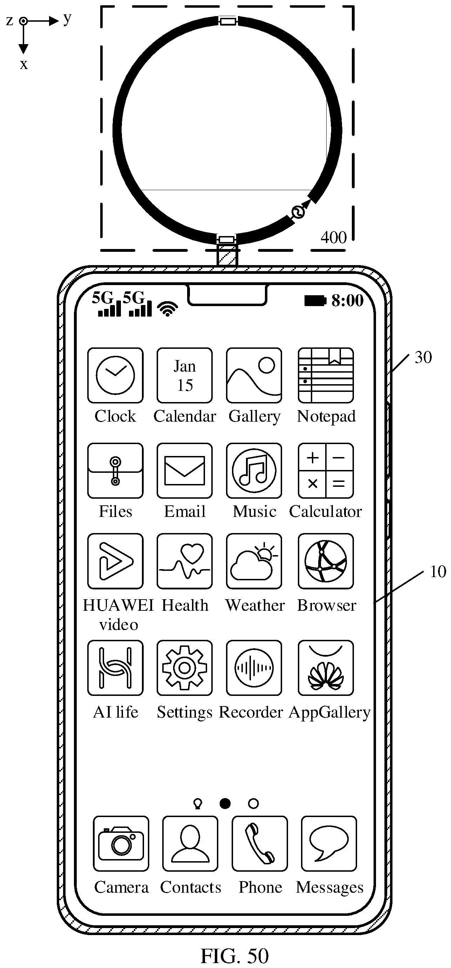

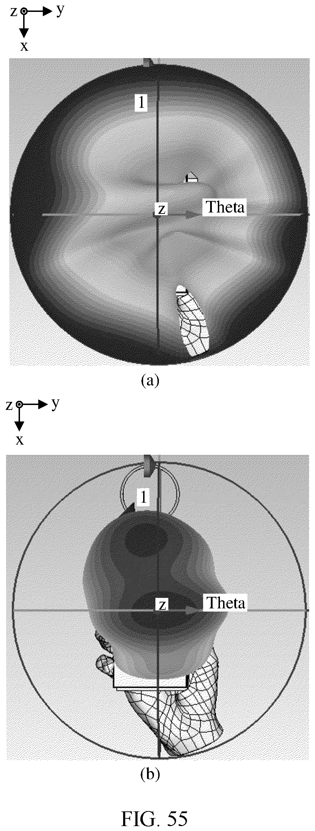

FIG. 55 is a pattern of an axial ratio and a gain of an antenna 400 when a user holds the electronic device 10 shown in FIG. 50.

(a) in FIG. 55 shows a circular polarization axial ratio pattern of the antenna at a frequency of 2 GHz. In a z direction, the antenna has a circular polarization characteristic. (b) in FIG. 55 shows a gain corresponding to LHCP of the antenna at 2 GHz. A maximum radiation direction of the antenna is approximately a z direction, and a maximum gain is 3.3 dBi.

A person skilled in the art may use different methods to implement the described functions for each specific application, but such implementation should not be considered beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An electronic device, comprising:

a conductive side frame, wherein the side frame has a first position and a second position, a side frame between the first position and the second position is a first side frame, and the first side frame is in a bent shape; and
an antenna, comprising the first side frame, wherein the antenna is configured to generate a first resonance and a second resonance, wherein
a ratio of a frequency of the first resonance to a frequency of the second resonance is greater than 1 and less than or equal to 1.5; and
an operating frequency band of the antenna comprises a first frequency band, and a frequency of the first frequency band is between the frequency of the first resonance and the frequency of the second resonance.

2. The electronic device according to claim 1, wherein a circular polarization axial ratio of the antenna on the first frequency band is less than or equal to 10 dB.

3. The electronic device according to claim 1 or 2, wherein a polarization mode of the first resonance and a polarization mode of the second resonance are orthogonal to each other.

4. The electronic device according to any one of claims 1 to 3, wherein
on the first frequency band, a difference between a first gain generated by the antenna and a second gain generated by the antenna is less than 10 dB, wherein the first gain is a gain of a pattern generated by the antenna in a first polarization direction, the second gain is a gain of a pattern generated by the antenna in a second polarization direction, and the first polarization direction and the second polarization direction are orthogonal to each other.

5. The electronic device according to any one of claims 1 to 4, wherein
on the first frequency band, a difference between a first phase generated by the antenna and a second phase generated by the antenna is greater than 25° and less than 155°, wherein the first phase is a phase of the antenna in the first polarization direction, the second phase is a phase of the antenna in the second polarization direction, and the first polarization direction and the second polarization direction are orthogonal to each other.

6. The electronic device according to any one of claims 1 to 5, wherein the ratio of the frequency of the first resonance to the frequency of the second resonance is greater than or equal to 1.2 and less than or equal to 1.35.

7. The electronic device according to any one of claims 1 to 6, wherein

the first side frame is divided into a first part and a second part by using a bent area, the first part extends in a first direction, and the second part extends in a second direction; and
a ratio of a length of the first part to a length of the second part is greater than or equal to 0.2 and less than or equal to 5.

8. The electronic device according to any one of claims 1 to 7, wherein
a first end and a second end of the first side frame are open ends.

9. The electronic device according to claim 8, wherein

the antenna further comprises an electronic element; and
the first side frame comprises a slot, and the electronic element is electrically connected between side frames on two sides of the slot.

10. The electronic device according to any one of claims 1 to 7, wherein

the antenna further comprises a ground plane; and
the ground plane, the first side frame is grounded at the first position and the second position through the ground plane.

11. The electronic device according to claim 10, wherein

the antenna further comprises an electronic element; and
the first side frame comprises a connection position, and the electronic element is electrically connected between the connection position and the ground plane.

12. The electronic device according to claim 9 or 11, wherein
an equivalent capacitance value of the electronic element is less than or equal to 10 pF, or an equivalent inductance value of the electronic element is less than or equal to 10 nH.

13. The electronic device according to claim 9 or 11, wherein a distance between the connection position or the slot and a center of the first side frame is less than or equal to three tenths of a first wavelength, and the first wavelength is a wavelength corresponding to the second resonance.

14. The electronic device according to claim 9 or 11, wherein a distance between the connection position or the slot and a center of the first side frame is less than or equal to one sixth of a first wavelength, and the first wavelength is a wavelength corresponding to the second resonance.

15. The electronic device according to any one of claims 1 to 14, wherein

the antenna further comprises a feed element; and
the first side frame comprises a feed point, the feed point is disposed between a midpoint of the first side frame and the first position, and the feed element is coupled to the first side frame at the feed point.

16. The electronic device according to claim 15, wherein a distance between the feed point and the first end of the first side frame is less than or equal to one fifth of the first wavelength, and the first wavelength is the wavelength corresponding to the second resonance.

17. The electronic device according to claim 16, wherein the distance between the feed point and the first end of the first side frame is less than or equal to one sixth of the first wavelength, and the first wavelength is the wavelength corresponding to the second resonance.

18. A protective housing, configured to accommodate an electronic device, wherein the protective housing comprises:

an annular radiator, wherein the radiator comprises a first slot and a second slot; and
an electronic element, wherein the electronic element is electrically connected between radiators on two sides of the first slot, wherein radiators on two sides of the second slot are configured to feed electrical signals with a phase difference of 180°±45°;
the radiator is configured to generate a first resonance and a second resonance;
a ratio of a frequency of the first resonance to a frequency of the second resonance is greater than 1 and less than or equal to 1.5; and
an operating frequency band of the antenna comprises a first frequency band, and a frequency of the first frequency band is between the frequency of the first resonance and the frequency of the second resonance.

**19.** The protective housing according to claim 18, wherein a circular polarization axial ratio of the antenna on the first frequency band is less than or equal to 10 dB.

**20.** The protective housing according to claim 18 or 19, wherein a polarization mode of the first resonance and a polarization mode of the second resonance are orthogonal to each other.

**21.** The protective housing according to any one of claims 18 to 20, wherein
on the first frequency band, a difference between a first gain generated by the antenna and a second gain generated by the antenna is less than 10 dB, wherein the first gain is a gain of a pattern generated by the antenna in a first polarization direction, the second gain is a gain of a pattern generated by the antenna in a second polarization direction, and the first polarization direction and the second polarization direction are orthogonal to each other.

**22.** The protective housing according to any one of claims 18 to 21, wherein
on the first frequency band, a difference between a first phase generated by the antenna and a second phase generated by the antenna is greater than 25° and less than 155°, wherein the first phase is a phase of the antenna in the first polarization direction, the second phase is a phase of the antenna in the second polarization direction, and the first polarization direction and the second polarization direction are orthogonal to each other.

**23.** The protective housing according to any one of claims 18 to 22, wherein the ratio of the frequency of the first resonance to the frequency of the second resonance is greater than or equal to 1.2 and less than or equal to 1.35.

**24.** The protective housing according to any one of claims 18 to 23, wherein an equivalent inductance value of the electronic element is less than or equal to 10 nH.

Z

Y    X

**Electronic
device 10**

Cover glass 13

Display 15

Middle frame 19

PCB 17

Side frame 11

Rear cover 21

FIG. 1

FIG. 2

FIG. 3

z ⊙——▸ y

x

○ Position with a largest
  current amplitude

101

(a)

z ⊙——▸ y

x

○ Position with a largest
  current amplitude

● Current zero point

101

(b)

z ⊙——▸ y

x

○ Position with a largest
  current amplitude

● Current zero point

101

(c)

FIG. 4

FIG. 5

FIG. 6

z ⊙ → y
↓
x

(a)

z ⊙ → y
↓
x

(b)

z ⊙ → y
↓
x

(c)

FIG. 7

FIG. 8

FIG. 9

FIG. 10

(a)

(b)

(c)

FIG. 11

FIG. 12

FIG. 13

FIG. 14

FIG. 15

One wavelength mode

Shift to a low frequency

Three-half
wavelength
mode

Frequency/GHz

(a)

2.28

Three-half
wavelength
mode

Phase/°

One
wavelength
mode

Frequency/GHz

(b)

FIG. 16

FIG. 17

FIG. 18

FIG. 19

FIG. 20

(a)

⬤ Current strong point

(b)

FIG. 21

FIG. 22

(a)

(b)

FIG. 23

FIG. 24

(a)

(b)

FIG. 25

FIG. 26

(a)

(b)

FIG. 27

z ⊙ → y
↓
x

301
310
302
321 320
311
300

FIG. 28

1 (1.72, –9.16)
2 (2.40, –18.3)

FIG. 29

(a)

● Electric field strong point

(b)

FIG. 30

FIG. 31

(a)

(b)

FIG. 32

FIG. 33

(a)

(b)

FIG. 34

FIG. 35

(a)

(b)

FIG. 36

FIG. 37

FIG. 38

FIG. 39

(a)

(b)

FIG. 40

FIG. 41

(a)

(b)

FIG. 42

FIG. 43

1 (2.07, −16.79)

Frequency/GHz

FIG. 44

(a)

(b)

FIG. 45

FIG. 46

(a)

(b)

FIG. 47

FIG. 48

FIG. 49

FIG. 50

1 (1.58, −9.92)
2 (2.43, −10.0)

FIG. 51

1 (2.09, 4.111)
2 (1.87, 4.037)

FIG. 52

FIG. 53

(a)

(b)

FIG. 54

(a)

(b)

FIG. 55

<table>
<tr><td colspan="2" align="center"><b>INTERNATIONAL SEARCH REPORT</b></td><td>International application No.<br><br><b>PCT/CN2023/108934</b></td></tr>
</table>

| | |
|---|---|
| **A.** | **CLASSIFICATION OF SUBJECT MATTER** |

H01Q1/36(2006.01)i; H01Q 15/24(2006.01)i

According to International Patent Classification (IPC) or to both national classification and IPC

| | |
|---|---|
| **B.** | **FIELDS SEARCHED** |

Minimum documentation searched (classification system followed by classification symbols)

IPC: H01Q

Documentation searched other than minimum documentation to the extent that such documents are included in the fields searched

Electronic data base consulted during the international search (name of data base and, where practicable, search terms used)

CNABS, CNTXT, DWPI, ENTXT, ENTXTC, OETXT, VEN, WPABS, WPABSC: 极化, 天线, 弯折, 谐振, 圆正交, polariz+, antenna, bend+, polariz+, circul+, orthogonal

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| A | CN 113764864 A (QIANXUN POSITION NETWORK CO., LTD.) 07 December 2021 (2021-12-07)<br>description, paragraphs 5-91, and figures 1-3 | 1-17 |
| A | CN 111816990 A (KUNSHAN RUIXIANG XUNTONG COMMUNICATION TECHNOLOGY CO., LTD.) 23 October 2020 (2020-10-23)<br>description, paragraphs 6-44, and figures 1-4 | 18-24 |
| A | CN 110890625 A (JINLIN MEDICAL UNIVERSITY) 17 March 2020 (2020-03-17)<br>entire document | 1-24 |
| A | CN 111628298 A (HUAWEI TECHNOLOGIES CO., LTD.) 04 September 2020 (2020-09-04)<br>entire document | 1-24 |
| A | CN 112003022 A (NANJING UNIVERSITY OF INFORMATION SCIENCE & TECHNOLOGY) 27 November 2020 (2020-11-27)<br>entire document | 1-24 |
| A | CN 113659334 A (HISENSE GROUP HOLDING CO., LTD. et al.) 16 November 2021 (2021-11-16)<br>entire document | 1-24 |

☑ Further documents are listed in the continuation of Box C. ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **02 November 2023** | **06 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

<div style="text-align: center"><b>INTERNATIONAL SEARCH REPORT</b></div>

| International application No. |
| --- |
| **PCT/CN2023/108934** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113745809 A (HUAWEI TECHNOLOGIES CO., LTD.) 03 December 2021 (2021-12-03) entire document | 1-24 |
| A | CN 113764885 A (HUAWEI TECHNOLOGIES CO., LTD.) 07 December 2021 (2021-12-07) entire document | 1-24 |
| A | CN 114696087 A (HUAWEI TECHNOLOGIES CO., LTD.) 01 July 2022 (2022-07-01) entire document | 1-24 |
| A | DE 102019213594 A1 (APPLE INC.) 02 April 2020 (2020-04-02) entire document | 1-24 |
| A | US 10957985 B2 (APPLE INC.) 23 March 2021 (2021-03-23) entire document | 1-24 |

Form PCT/ISA/210 (second sheet) (July 2022)

**INTERNATIONAL SEARCH REPORT**
Information on patent family members

International application No.

**PCT/CN2023/108934**

| Patent document cited in search report | | | Publication date (day/month/year) | Patent family member(s) | | | Publication date (day/month/year) |
|---|---|---|---|---|---|---|---|
| CN | 113764864 | A | 07 December 2021 | None | | | |
| CN | 111816990 | A | 23 October 2020 | None | | | |
| CN | 110890625 | A | 17 March 2020 | None | | | |
| CN | 111628298 | A | 04 September 2020 | None | | | |
| CN | 112003022 | A | 27 November 2020 | None | | | |
| CN | 113659334 | A | 16 November 2021 | None | | | |
| CN | 113745809 | A | 03 December 2021 | None | | | |
| CN | 113764885 | A | 07 December 2021 | None | | | |
| CN | 114696087 | A | 01 July 2022 | None | | | |
| DE | 102019213594 | A1 | 02 April 2020 | US | 2020106185 | A1 | 02 April 2020 |
| | | | | US | 10957985 | B2 | 23 March 2021 |
| | | | | KR | 20200036742 | A | 07 April 2020 |
| | | | | KR | 102156328 | B1 | 15 September 2020 |
| US | 10957985 | B2 | 23 March 2021 | None | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210896555

- CN 202211340471